(19) Europäisches Patentamt European Patent Office Office européen des brevets

(11) **EP 4 506 884 A1**

(12) **EUROPEAN PATENT APPLICATION**
published in accordance with Art. 153(4) EPC

(43) Date of publication:
**12.02.2025 Bulletin 2025/07**

(21) Application number: **23851326.1**

(22) Date of filing: **29.05.2023**

(51) International Patent Classification (IPC):
**G06T 5/00** (2024.01)

(52) Cooperative Patent Classification (CPC):
**G06T 5/77;** G06T 2207/20081

(86) International application number:
**PCT/CN2023/096836**

(87) International publication number:
**WO 2024/032098 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 CN 202210951294**

(71) Applicant: **Tencent Technology (Shenzhen) Company Limited**
**Shenzhen, Guangdong 518057 (CN)**

(72) Inventors:
• **WANG, Hong**
**Shenzhen, Guangdong 518057 (CN)**
• **ZHENG, Yefeng**
**Shenzhen, Guangdong 518057 (CN)**

(74) Representative: **EP&C**
**P.O. Box 3241**
**2280 GE Rijswijk (NL)**

(54) **TRAINING METHOD AND APPARATUS FOR ARTIFACT REMOVAL MODEL, AND DEVICE, MEDIUM AND PROGRAM PRODUCT**

(57) This application provides a method and an apparatus for training an artifact removal model, a device, a medium, and a program product, and relates to the field of machine learning. The method includes: obtaining a reference image and an artifact image (310); inputting the artifact image into a plurality of sample removal models to obtain artifact removal results respectively (320); determining predicted loss values each respectively corresponding to one of the plurality of sample removal models (330); inputting the predicted loss values into a sample weight model to output weight adjustment parameters respectively (340); and training the plurality of sample removal models based on the predicted loss values and the weight adjustment parameters to obtain an artifact removal model including a plurality of artifact removal sub-models (350). The foregoing solution enables flexible training based on the weight adjustment parameters during training for the plurality of sample removal models, thereby improving accuracy of artifact removal model training.

FIG. 3

EP 4 506 884 A1

**Description**

RELATED APPLICATION

This application claims priority to Chinese Patent Application No. 202210951294.0, entitled "METHOD AND APPARATUS FOR TRAINING ARTIFACT REMOVAL MODEL, DEVICE, MEDIUM, AND PROGRAM PRODUCT" and filed with the China National Intellectual Property Administration on August 9, 2022, which is incorporated herein by reference in its entirety.

FIELD OF THE TECHNOLOGY

This application relates to the field of machine learning, and in particular, to a method and an apparatus for training an artifact removal model, a device, a medium, and a program product.

BACKGROUND OF THE DISCLOSURE

During computed tomography (CT) scanning, an artifact is produced in a CT image due to the influence of different factors, for example: when performing CT scanning of oral cavity, since dentures are implanted in teeth, a generated CT image is affected by the dentures to produce a strip shadow.

In the related art, a dual-domain network (DuDoNet) is used to remove the artifact in the CT image. The dual-domain network includes two modules. By presetting a CT value processing window, a chordal diagram including the artifact is processed in a chordal diagram domain, and a CT image including the artifact is processed in an image domain, to output a repaired sinusoidal image and an enhanced CT image. Finally, a CT image with the artifact removed is outputted by using a back-projection layer.

However, in the related art, a CT image including the artifact is removed by using the dual-domain network. As a result, the CT image with the artifact removed has a lower restoration fidelity, lower image accuracy, and a poorer image quality.

SUMMARY

Embodiments of this application provide a method and an apparatus for training an artifact removal model, a device, a medium, and a program product, which can improve accuracy of an output result of the artifact removal model. The technical solutions are as follows:

According to an aspect, a method for training an artifact removal model is provided, and is performed by a computer device. The method includes:

  obtaining a reference image and an artifact image, the reference image being generated by scanning a sample detection object without an implant, the artifact image being formed by introducing an artifact to the reference image, and the artifact being a shadow of the implant generated during scanning;

  inputting the artifact image into a plurality of sample removal models to obtain artifact removal results respectively, the plurality of sample removal models corresponding to different preset window ranges, and each of the sample removal models being configured to remove the artifact in the artifact image based on a corresponding preset window range;

  determining predicted loss values each respectively corresponding to one of the plurality of sample removal models based on a pixel difference between the respective artifact removal result and the reference image;

  inputting the predicted loss values into a sample weight model to output weight adjustment parameters respectively, each of the weight adjustment parameters being configured to perform weight adjustment on a parameter update of a corresponding sample removal model; and

  training the plurality of sample removal models based on the predicted loss values and the weight adjustment parameters to obtain an artifact removal model comprising a plurality of artifact removal sub-models, each of the artifact removal sub-models being configured to perform artifact removal on a target image based on a corresponding preset window range.

According to another aspect, an apparatus for training an artifact removal model is provided. The apparatus includes:

an obtaining module, configured to obtain a reference image and an artifact image, the reference image being generated by scanning a sample detection object without an implant, the artifact image being formed by introducing an artifact to the reference image, and the artifact being a shadow of the implant generated during scanning;

an input module, configured to input the artifact image into a plurality of sample removal models to obtain artifact removal results respectively, the plurality of sample removal models corresponding to different preset window ranges, and each of the sample removal models being configured to remove the artifact in the artifact image based on a corresponding preset window range;

a determining module, configured to determine predicted loss values each respectively corresponding to one of the plurality of sample removal models based on a pixel difference between the respective artifact removal result and the reference image;

the input module being configured to input the predicted loss values into a sample weight model to output weight adjustment parameters respectively, each of the weight adjustment parameters being configured to perform weight adjustment on a parameter update of a corresponding sample removal model; and

a training module, configured to train the plurality of sample removal models based on the predicted loss values and the weight adjustment parameters to obtain an artifact removal model comprising a plurality of artifact removal sub-models, each of the artifact removal sub-models being configured to perform artifact removal on a target image based on a corresponding preset window range.

According to another aspect, a computer device is provided. The computer device includes a processor and a memory, the memory storing at least one instruction, at least one program, a code set or an instruction set, the at least one instruction, the at least one program, the code set or the instruction set being loaded and executed by the processor to implement the method for training an artifact removal model according to any one of the foregoing embodiments of this application.

According to another aspect, a computer-readable storage medium is provided. The computer-readable storage medium stores at least one instruction, at least one program, a code set, or an instruction set, the at least one instruction, the at least one program, the code set or the instruction set being loaded and executed by a processor to implement the method for training an artifact removal model according to any one of the foregoing embodiments of this application.

According to another aspect, a computer program product or a computer program is provided. The computer program product or the computer program includes computer instructions, the computer instructions being stored in a computer-readable storage medium. A processor of a computer device reads the computer instructions from the computer-readable storage medium. The processor executes the computer instructions, so that the computer device performs the method for training an artifact removal model according to any one of the foregoing embodiments.

The technical solutions provided in the embodiments of this application include at least the following beneficial effects:

The plurality of sample removal models are trained by using the reference image and the artifact image. During training, the artifact image is inputted into the plurality of sample removal models to obtain artifact removal results respectively, and the predicted loss values between the respective artifact removal result and the reference image are determined. After the predicted loss values are inputted into the sample weight model, the weight adjustment parameters corresponding to the predicted loss values are finally obtained. The plurality of sample removal models are trained based on the predicted loss values and the weight adjustment parameters to finally obtain the artifact removal model including the plurality of artifact removal sub-models. That is, the plurality of sample removal models corresponding to different preset window ranges are trained by using the weight adjustment parameters and the predicted loss values, so that the artifact removal model finally obtained through training can output artifact removal images corresponding to the different window ranges, which meets artifact removal requirements of different images and improves artifact removal accuracy of the artifact removal results.

BRIEF DESCRIPTION OF THE DRAWINGS

FIG. 1 is a schematic diagram of a method for training an artifact removal model according to an exemplary embodiment of this application.

FIG. 2 is a schematic diagram of an implementation environment according to an exemplary embodiment of this application.

FIG. 3 is a schematic flowchart of a method for training an artifact removal model according to an exemplary embodiment of this application.

FIG. 4 is a schematic flowchart of a method for training an artifact removal model according to another exemplary embodiment of this application.

FIG. 5 is a schematic diagram of a DICD-Net model according to another exemplary embodiment of this application.

FIG. 6 is a schematic structural diagram of a network according to an exemplary embodiment of this application.

FIG. 7 is a schematic diagram of a network structure of a sample weight model according to an exemplary embodiment of this application.

FIG. 8 is a schematic diagram of a plurality of sample removal models according to an exemplary embodiment of this application.

FIG. 9 is a schematic diagram of a method for training an artifact removal model according to another exemplary embodiment of this application.

FIG. 10 is a schematic diagram of an application process of an artifact removal model according to an exemplary embodiment of this application.

FIG. 11 is a schematic diagram of a method for training an artifact removal model according to an exemplary embodiment of this application.

FIG. 12 is a schematic diagram of a processing process of an artifact removal model according to an exemplary embodiment of this application.

FIG. 13 is a structural block diagram of an apparatus for training an artifact removal model according to an exemplary embodiment of this application.

FIG. 14 is a structural block diagram of an apparatus for training an artifact removal model according to another exemplary embodiment of this application.

FIG. 15 is a schematic structural diagram of a server according to an exemplary embodiment of this application.

DESCRIPTION OF EMBODIMENTS

To make objectives, technical solutions, and advantages of this application clearer, implementations of this application are further described below in detail with reference to the accompanying drawings.

First, terms involved in the embodiments of this application are briefly introduced.

Window technology: The window technology is a display technology configured to observe normal tissues or lesions of different densities in a computed tomography (CT) check, including a window width (Window Width) and a window level (Window Level). Since various tissue structures or lesions have different CT values, when details of a specified tissue structure need to be displayed on a CT image, a window width and a window level that are suitable for observing the specified tissue structure needs to be selected to form a specified window range to obtain an optimal display mode for the specified tissue structure, so that a grayscale image of a CT value corresponding to the specified window range is generated.

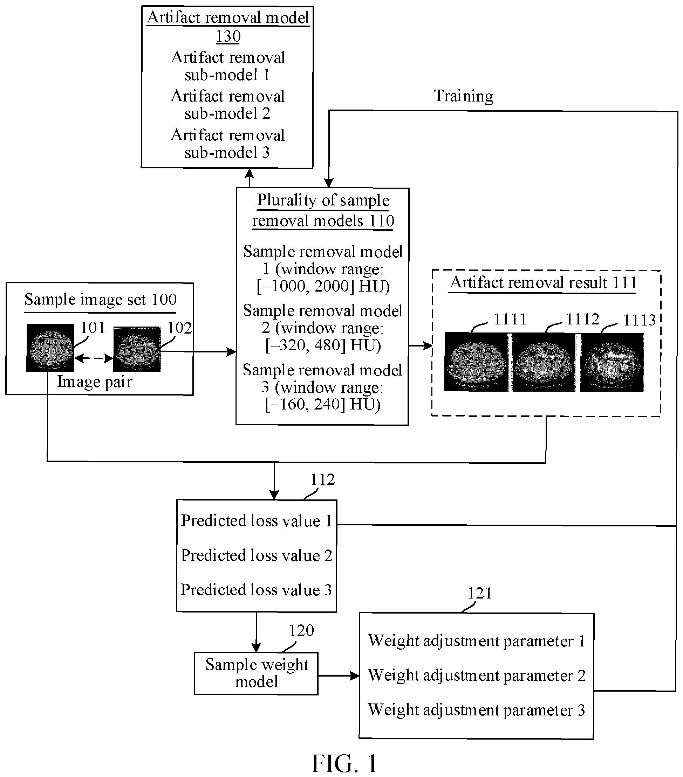

For example, FIG. 1 is a schematic diagram of a method for training an artifact removal model according to an exemplary embodiment of this application. In the embodiments of the present disclosure including the embodiments of both the claims and the specification (hereinafter referred to as "all embodiments of the present disclosure"), as shown in FIG. 1, a training image set 100 can be obtained, where the training image set 100 includes a reference image 101 and an artifact image 102 whose image content matches, the reference image 101 and the artifact image 102 are a sample image pair. Both the reference image 101 and the artifact image 102 are CT images obtained by performing the computed tomography (CT) on abdomen. The artifact image 102 is an image including an artifact (an abdominal CT image contaminated by an artifact), and the reference image 101 does not include an artifact (an abdominal CT image not contaminated by an artifact).

In all embodiments of the present disclosure, the artifact image 102 can be inputted into a plurality of sample removal models 110 to respectively output artifact removal results 111 of the artifact image 102, where the sample removal models in the plurality of sample removal models 110 correspond to different preset window ranges, so that the artifact removal results 111 are implemented as artifact removal images corresponding to different preset window ranges (for example: an image 1111 is a CT image in a [-1000, 2000] HU window range, an image 1112 is a CT image in a [-320, 480] HU window range, and an image 1113 is a CT image in a [-160, 240] HU window range). Predicted loss values 112 respectively corresponding to the plurality of sample removal models 110 are determined based on pixel differences between the artifact removal results 111 and reference image 101.

In all embodiments of the present disclosure, the predicted loss values 112 can be inputted into a sample weight model 120 to output weight adjustment parameters 121 respectively corresponding to the predicted loss values 112, and the weight adjustment parameter 121 is configured to perform weight adjustment on a parameter update of the sample removal model 110. The plurality of sample removal models 110 are trained based on the predicted loss values 112 and the weight adjustment parameters 121 to finally obtain an artifact removal model 130 including a plurality of artifact removal sub-models, where the artifact removal model 130 is configured to remove an artifact from an input target image including the artifact.

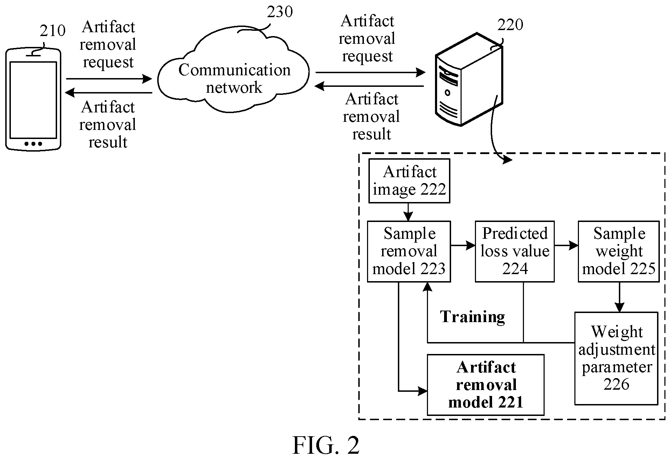

An implementation environment involved in the embodiments of this application is described. For example, referring to FIG. 2, the implementation environment involves a terminal 210 and a server 220. The terminal 210 is connected to the server 220 through a communication network 230.

In all embodiments of the present disclosure, the terminal 210 transmits an artifact removal request to the server 220, where the artifact removal request includes a target scan image. In this embodiment, the target scan image is implemented as a CT image (to be specific, in a CT scanning process of a specified part of a human body, a metal artifact generated when a generated CT image is affected by metal implanted in the designated part) contaminated by metal. After receiving the artifact removal request transmitted from the terminal, the server 220 performs artifact removal on the metal artifact included in the target scan image to generate an artifact removal result, and feeds back the artifact removal result to the terminal 210.

In all embodiments of the present disclosure, the server 220 can include an artifact removal model 221. The server 220 inputs the target scan image into the artifact removal model 221 to output an artifact removal result, and the artifact removal result refers to a CT enhanced image generated by removing an identified artifact region in the target scan image.

In all embodiments of the present disclosure, the artifact removal model 221 can be obtained by inputting an artifact image 222 for training into a plurality of sample removal models 223 to output a plurality of artifact removal results, determining a plurality of predicted loss values 224 based on pixel differences between the artifact removal results and the reference image (an image whose image content matches that of the artifact image 222 and does not include an artifact), inputting the predicted loss values 224 into a sample weight model 225 to output weight adjustment parameters 226 respectively corresponding to the plurality of predicted loss values 224, and training the sample removal models 223 based on the weight adjustment parameters 226 and the predicted loss values 224.

In all embodiments of the present disclosure, the foregoing terminal 210 may be terminal devices in a plurality of forms such as a mobile phone, a tablet computer, a desktop computer, a portable notebook computer, a smart television, and a smart vehicle. This is not limited in the embodiments of this application.

In all embodiments of the present disclosure, the foregoing server 220 may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform.

In all embodiments of the present disclosure, the cloud technology can be a hosting technology that unifies a series of resources such as hardware, software, and networks in a wide area network or a local area network to implement computing, storage, processing, and sharing of data.

In all embodiments of the present disclosure, the foregoing server 220 may alternatively be implemented as a node in a blockchain system.

The information (including, but not limited to, user equipment information, user personal information, and the like), data (including, but not limited to, data for analysis, stored data, displayed data, and the like), and signals involved in this application all are authorized by the user or fully authorized by each party, and the collection, use, and processing of relevant data need to comply with relevant laws and regulations of relevant countries and regions. For example, the reference image and the artifact image configured for training, and a verification image configured for model verification involved in this application are all obtained with full authorization.

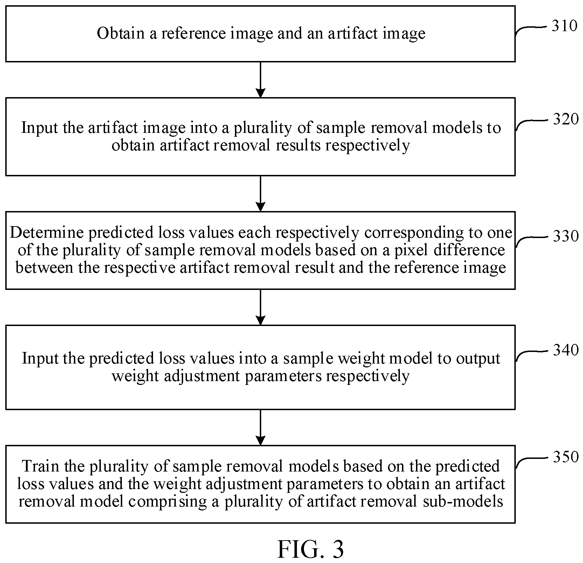

For example, a method for training an artifact removal model provided in this application is described. FIG. 3 is a schematic flowchart of a method for training an artifact removal model according to an exemplary embodiment of this application. The method is performed by a computer device, for example, the method may be performed by a terminal, a server, or both a terminal and a server. In this embodiment, description is made by using an example in which the method is performed by the server. As shown in FIG. 3, the method includes the following operaions:

**Operation 310**: Obtain a reference image and an artifact image.

In all embodiments of the present disclosure, the reference image can be an image generated by scanning a sample detection object without an implant, the artifact image can be formed by introducing an artifact to the reference image, and the artifact can be a shadow caused by an implant during scanning of a sample detection object including the implant. That is, the foregoing artifact can be a shadow of the implant generated during scanning.

For example, the reference image refers to a medical image generated by scanning the sample detection object using a specified scanning technology. Generally, the artifact image is implemented as a grayscale image. The sample detection object is configured to represent a specified tissue or organ (for example, a heart, an abdomen, a chest, and a lung).

In all embodiments of the present disclosure, the reference image can be a medical image obtained by scanning the sample detection object that does not include the implant, that is, the reference image is a medical image that is not affected by the implant.

In all embodiments of the present disclosure, the implant can refer to an object that includes a metal part and is implanted in a detection object, for example, at least one type of implant such as dentures, a pacemaker, or a stent. This is not limited herein.

For example, the specified scanning technology refers to a CT scanning technology. Therefore, images involved in the embodiments of this application are all CT images.

In all embodiments of the present disclosure, image content matching means that a content included in the reference image and a content included in the artifact image are the same. For example, the reference image and the artifact image are both CT images generated by performing CT scanning on the same abdomen. A difference between the artifact image and the reference image is that the artifact image is the reference image including the artifact. That is, the reference image and the artifact image are implemented as a sample image pair.

For example, the artifact represents a shadow (or a dark band) on an image caused by an object other than the sample detection object during scanning.

**Operation 320**: Input the artifact image into a plurality of sample removal models to obtain artifact removal results respectively.

In all embodiments of the present disclosure, the computer device (for example, a server) can input the artifact image into the plurality of sample removal models to obtain the artifact removal results corresponding to the artifact images respectively outputted by the plurality of sample removal models.

In all embodiments of the present disclosure, the plurality of sample removal models correspond to different preset window ranges, and each of the sample removal models can be configured to remove the artifact in the artifact image based on a corresponding preset window range.

In all embodiments of the present disclosure, the artifact removal result can refer to removing the artifact included in the artifact image through the sample removal model and outputting a scan image corresponding to the preset window range corresponding to the sample removal model, that is, the scan image does not include the artifact.

In all embodiments of the present disclosure, a contrast relationship between regions presented in the foregoing scan image can be the same as or different from a contrast relationship between regions presented in the artifact image. This is not limited herein.

For example, the preset window range is configured to represent a contrast relationship between regions in the scan image. For example: the scan image includes a region a and a region b. In a corresponding preset window range A, the brightness of the region a in the scan image is higher than that of the region b. In a corresponding preset window range B, the brightness of the region a in the scan image is lower than that of the region b. That is, when the same scan image corresponds to different preset window ranges, the contrasts of displayed regions of the same scan image are different, which facilitates targeted viewing of a designated region.

In all embodiments of the present disclosure, a preset window range corresponding to a sample removal model is a preset fixed window range, for example: the preset window range corresponding to a sample removal model A is [-1000, 2000] HU; or the preset window range corresponding to the sample removal model is an adjustable window range set according to actual needs. This is not limited herein.

In all embodiments of the present disclosure, the plurality of sample removal models correspond to the same model structure; or the plurality of sample removal models correspond to different model structures. This is not limited herein.

**Operation 330**: Determine predicted loss values each respectively corresponding to one of the plurality of sample removal models based on a pixel difference between the respective artifact removal result and the reference image.

For example, the predicted loss value is configured to represent a difference between pixels of the artifact removal result and the reference image.

In all embodiments of the present disclosure, a loss function can be preset. A distance between a pixel value corresponding to the artifact removal result and a pixel value corresponding to the reference image is calculated through the loss function, and a result obtained through calculation is used as the predicted loss value corresponding to the plurality of sample removal models.

**Operation 340**: Input the predicted loss values into a sample weight model to output weight adjustment parameters respectively.

In all embodiments of the present disclosure, each of the weight adjustment parameters can be configured to perform weight adjustment on a parameter update of a corresponding sample removal model.

In all embodiments of the present disclosure, the predicted loss values corresponding to the plurality of sample removal models can be respectively inputted into the sample weight model to output a scalar result, and the scalar result can be used as a weight adjustment parameter corresponding to a single predicted loss value.

In all embodiments of the present disclosure, after the predicted loss values respectively corresponding to different sample removal models can be inputted into the sample weight model, the weight adjustment parameters of the plurality of predicted loss values correspondingly outputted are different; or there are at least two predicted loss values respectively corresponding to the same weight adjustment parameter. This is not limited herein.

For example, the weight adjustment parameter can be configured to assign different weights to predicted loss values during training of the sample removal model using the predicted loss values.

In all embodiments of the present disclosure, after the predicted loss values respectively corresponding to the plurality of sample removal models are obtained, the plurality of predicted loss values can be simultaneously inputted into the sample weight model to simultaneously output the weight adjustment parameters respectively corresponding to the plurality of predicted loss values. That is, the weight adjustment parameters respectively corresponding to the plurality of predicted loss values are simultaneously obtained. Alternatively, once each predicted loss value corresponding to a sample removal model is obtained, the predicted loss value corresponding to the sample removal model is inputted into the sample weight model to output the weight adjustment parameter corresponding to the sample weight model. That is, the weight adjustment parameters respectively corresponding to the plurality of predicted loss values are sequentially obtained. This is not limited herein.

**Operation 350**: Train the sample removal model based on the predicted loss values and the weight adjustment parameters to obtain an artifact removal model including a plurality of artifact removal sub-models.

In all embodiments of the present disclosure, each of the artifact removal sub-models can be configured to perform artifact removal on the target image based on a corresponding preset window range.

For example, parameter adjustment is performed on first model parameters of the sample removal model based on the predicted loss values and the weight adjustment parameters, and the artifact removal sub-model is determined based on adjusted parameters.

In all embodiments of the present disclosure, a single artifact removal sub-model can be obtained by training a single sample removal model, and finally the plurality of artifact removal sub-models constitute the artifact removal model.

In all embodiments of the present disclosure, during training the sample removal model based on the predicted loss values and the weight adjustment parameters, training processes of the sample removal models can be simultaneously performed, or training processes of the sample removal models can be sequentially performed, that is, after the first sample removal model is trained, the second sample removal model starts to be trained. This is not limited herein.

In summary, according to the method for training an artifact removal model provided in the embodiments of this application, the plurality of sample removal models are trained by using the reference image and the artifact image whose image content matches. During training, the artifact image is inputted into the plurality of sample removal models to respectively output the plurality of artifact removal results, and the predicted loss values between the plurality of artifact removal results and the reference image are determined. After the predicted loss values are inputted into the sample weight model, the weight adjustment parameters corresponding to the predicted loss values are finally obtained. The plurality of sample removal models are trained based on the predicted loss values and the weight adjustment parameters to finally obtain the artifact removal model including the plurality of artifact removal sub-models. The plurality of sample removal models corresponding to different preset window ranges are trained by using the weight adjustment parameters and the predicted loss values, so that the artifact removal model finally obtained through training can output artifact removal images corresponding to the different window ranges, which meets artifact removal requirements of different images and improves artifact removal accuracy of the artifact removal results.

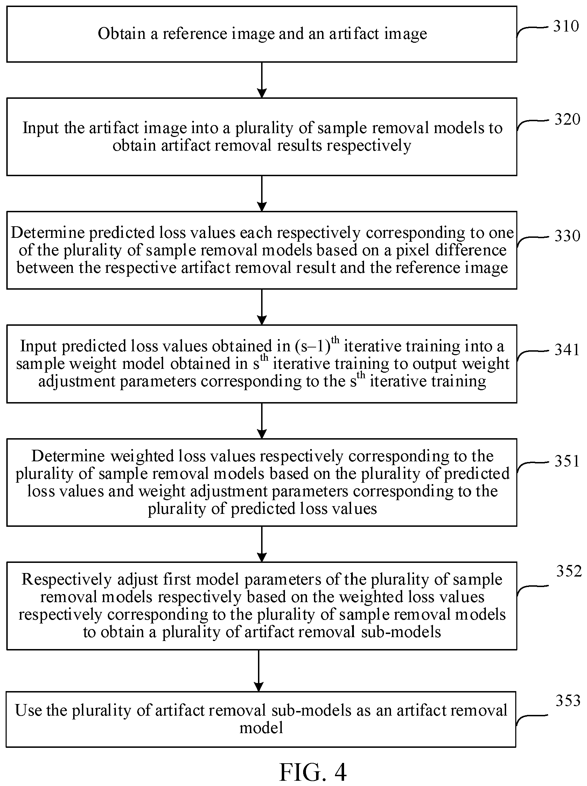

In all embodiments of the present disclosure, an example of training a single sample removal model is used, and a training process of the sample removal model is implemented as a cyclical iterative training process for a plurality of times. For example, FIG. 4 is a schematic flowchart of a method for training an artifact removal model according to an exemplary embodiment of this application. The method is performed by a computer device, for example, the method may be performed by a terminal, a server, or both a terminal and a server. In this embodiment, description is made by using an example in which the method is performed by the server. As shown in FIG. 3, where operation 350 includes operation 351, operation 352, and operation 353, and operation 340 further includes operation 341, the method includes the following operations:

**Operation 310**: Obtain a reference image and an artifact image.

In all embodiments of the present disclosure, the reference image can be an image generated by scanning a sample detection object without an implant, the artifact image can be formed by introducing an artifact to the reference image, and the artifact can be a shadow caused by an implant during scanning of a sample detection object including the implant.

In this embodiment, a metal artifact is used as an example for description. The artifact made of metal is implemented as an artifact in a strip-shaped structure.

For example, the reference image is a CT image generated after a sample detection image is performed CT scanning, and the artifact image is a CT image including the metal artifact, that is, a current artifact image includes the metal artifact in an image generated by CT scanning due to the presence of metal in the sample detection image.

In all embodiments of the present disclosure, the artifact image and the reference image can be directly obtained from an authorized public dataset; or the reference image is an image directly obtained from a public data set. The artifact image is a reference image including the metal artifact that is artificially synthesized based on the reference image and combined with metal mask information corresponding to different metals. This is not limited herein.

In this embodiment, the reference image and the artifact image are implemented as a sample image pair.

In all embodiments of the present disclosure, the reference image and the artifact image can be scan images corresponding to the same sample detection object.

**Operation 320**: Input the artifact image into a plurality of sample removal models to obtain artifact removal results respectively.

In all embodiments of the present disclosure, the plurality of sample removal models correspond to different preset window ranges, and each of the sample removal models can be configured to remove the artifact in the artifact image based on a corresponding preset window range.

For example, the preset window range of the sample removal model is a preset fixed window range, for example: the preset window range of the sample removal model A is fixed at [-320, 480] HU.

For example, different sample removal models correspond to different preset window ranges.

In all embodiments of the present disclosure, the sample removal model can be configured to remove the artifact from the artifact image and adjust the artifact image to a display mode corresponding to the preset window range based on the preset window range. An output result is the artifact removal result, for example, the artifact image is a CT image including the metal artifact with a window range of [-1000, 2000] HU. Before the artifact image is inputted into the sample removal model (the preset window range is [-320, 480] HU), the window range of the artifact image is first adjusted to [-320, 480] HU and then the artifact image is inputted into the sample removal model. The sample removal model removes the metal artifact from the artifact image and outputs the image as the artifact removal result.

For example, the image content displayed by the artifact removal results corresponding to different preset window ranges remains consistent, and the contrast of regions displayed by each artifact removal result is different.

In all embodiments of the present disclosure, the sample removal model in the embodiments of this application may be implemented as a neural network model such as a deep interpretables convolutional dictionary network (DICD-Net), a convolutional neural network (CNN), and a U-net network. This is not limited herein.

An example in which the sample removal model is implemented as the DICD-Net is used for description in the following.

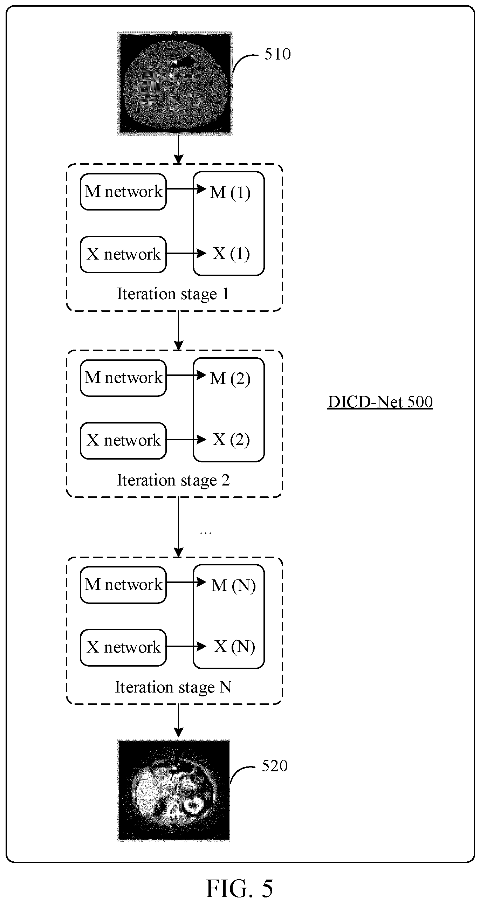

For an artifact caused by metal, there is prior knowledge unique to the metal artifact, that is, the metal artifact has a non-local strip structure. This prior knowledge can play a guiding role in parameter learning of the sample removal model. For example, FIG. 5 is a schematic diagram of a DICD-Net model according to an exemplary embodiment of this application. As shown in FIG. 5, the DICD-Net 500 includes N iteration processes. In any iteration process, a single iteration process includes a $\mathcal{M}$ network ($\mathcal{M}$-Net) and a *X* network (*X*-Net) in sequence.

As shown in FIG. 5, an artifact image 510 is inputted into the DICD-Net for N iterative removal (N Stages) to output an artifact removal result 520 corresponding to the artifact image. The artifact removal result 520 is implemented as a CT image obtained by removing the artifact image through N *M* networks and *X* networks. The *M* network and the *X* network separately complete an update of a feature layer ($\mathcal{M}$) and the artifact removal result 520.

The following describes a single stage during N iterative removals.

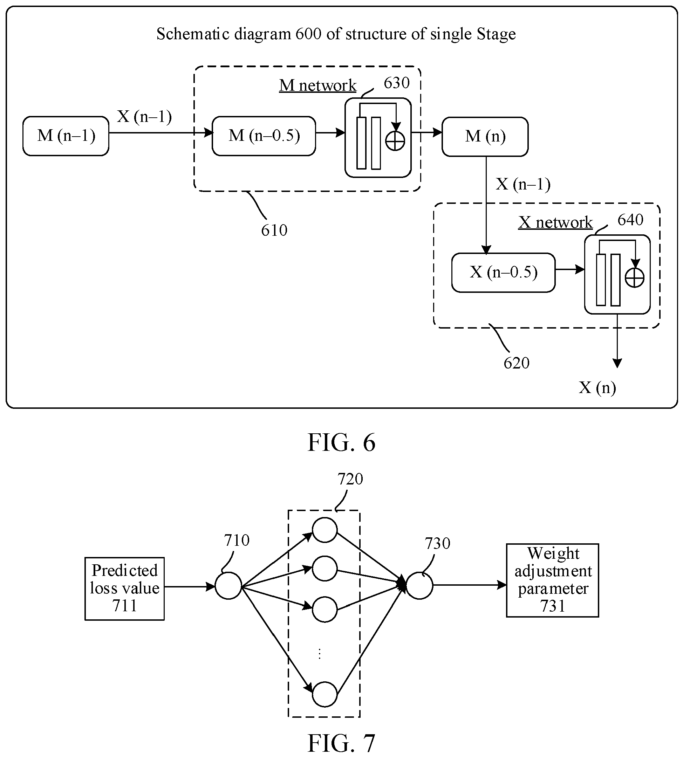

For example, FIG. 6 is a schematic structural diagram of a network according to an exemplary embodiment of this application. As shown in FIG. 6, a schematic diagram 600 corresponding to an *M* network and an *X* network is currently displayed in a single stage, including an $\mathcal{M}$ network structure 610 and an *X* network structure 620.

For example, for a network structure of the *M* network 610, reference may be made to the following Formula 1:

$$\text{Formula 1: } \mathcal{M}^{(n)} = \text{proxNet}_{\theta_m^{(n)}} (\mathcal{M}^{(n-0.5)})$$

$\mathcal{M}^{(n)}$ represents an output result of the *M* network during $n^{th}$ iterative removal, $\text{proxNet}_{\theta_m^{(n)}}(\cdot)$ represents a residual network 630. Each residual block in the residual network 630 includes: a convolution layer, a batch normalization layer (Batch Normalization), a ReLU layer, a convolution layer, a Batch Normalization layer, and a cross-link layer in sequence.

**[0080]** ,

$$\mathcal{M}^{(n-0.5)} = \mathcal{M}^{(n-1)} - \eta_1 \mathcal{K} \otimes^T (\boldsymbol{I} \odot (\mathcal{K} \otimes \mathcal{M}^{(n-1)} + \boldsymbol{X}^{(n-1)} - \boldsymbol{Y})),$$

Y represents an inputted artifact image (and the artifact image includes an metal artifact); X represents an artifact removal result ($\boldsymbol{X}^{(n-1)}$ represents an artifact removal result obtained in an $(n-1)^{th}$ iterative stage); *I* represents mask information (Mask) corresponding to a non-metallic artifact in the artifact image; and $\mathcal{K}$ represents a mode of recurring the metal artifact. In this embodiment, it may be understood as a display mode of the metal artifact. *M* is a feature layer, which represents a strip-shaped artifact structure of the metal artifact. In this embodiment, it may be understood as a feature map (Feature Map) corresponding to the metal artifact, and $\eta_1$ is an update step of the $\mathcal{M}$ network.

For example, for a network structure of the X network 620, reference may be made to the following Formula 2:

$$\text{Formula 2: } X^{(n)} = \text{proxNet}_{\theta_X^{(n)}} (X^{(n-0.5)})$$

$X^{(n)}$ represents an output result of the *X* network during $n^{th}$ iterative removal, $\text{proxNet}_{\theta_X^{(n)}}(\cdot)$ represents a residual network 640. Each residual block in the residual network 640 includes: a convolution layer, a batch normalization layer (Batch Normalization), a ReLU layer, a convolution layer, a Batch Normalization layer, and a cross-link layer in sequence.

$X^{(n-0.5)} = (\mathbf{1} - \eta_2 \boldsymbol{I}) \odot \boldsymbol{X}^{(n-1)} + \eta_2 \boldsymbol{I} \odot (\boldsymbol{Y} - \mathcal{K} \otimes \mathcal{M}^{(n)})$, Y represents an inputted artifact image (and the artifact image includes an metal artifact); *X* represents an artifact removal result ($\boldsymbol{X}^{(n-1)}$ represents an artifact removal result obtained in an $(n-1)^{th}$ iterative stage); *I* represents mask information (Mask) corresponding to a non-metallic artifact in the artifact image; and $\mathcal{K}$ represents a mode of recurring the metal artifact. In this embodiment, it may be understood as a display mode of the metal artifact. *M* is a feature layer, which represents a strip-shaped artifact structure of the metal artifact. In this embodiment, it may be understood as a feature map (Feature Map) corresponding to the metal artifact, and $\eta_2$ is an update step of the *X* network.

With reference to the foregoing Formula 1 and Formula 2, as shown in FIG. 6, when an $(n-1)^{th}$ feature map ($\mathcal{M}^{(n-1)}$) obtained in an $(n-1)^{th}$ iterative removal stage and an artifact removal result ($X^{(n-1)}$) obtained in the $(n-1)^{th}$ iterative removal stage are inputted into the *M* network, an $n^{th}$ feature map ($\mathcal{M}^{(n)}$) obtained in an $n^{th}$ iterative removal stage is outputted. The $n^{th}$ feature map ($\mathcal{M}^{(n)}$) and the artifact removal result ($\boldsymbol{X}^{(n-1)}$) obtained in the $(n-1)^{th}$ iterative stage are inputted into the *X* network to output the artifact removal result ($\boldsymbol{X}^{(n)}$) in the $n^{th}$ iterative stage.

**Operation 330**: Determine predicted loss values each respectively corresponding to one of the plurality of sample removal models based on a pixel difference between the respective artifact removal result and the reference image.

For example, a loss function is preset. Pixel value differences between the artifact removal results and the reference image are calculated through a preset loss function, and calculated results are used as the predicted loss values respectively corresponding to the plurality of sample removal models.

In this embodiment, the preset loss function is $\mathcal{L}_b(\Theta)$. b represents a sample removal model corresponding to a $b^{th}$ preset window range, and $\Theta$ represents a first model parameter of the sample removal model.

**Operation 341:** Input predicted loss values obtained in $(s-1)^{th}$ iterative training into a sample weight model obtained in $s^{th}$ iterative training to output weight adjustment parameters corresponding to the $s^{th}$ iterative training.

In this embodiment, during training for the sample removal model, the sample weight model also needs to be trained.

A training process for the sample weight model is first described in the following.

In all embodiments of the present disclosure, a verification reference image and a verification artifact image whose image content matches are obtained; the verification artifact image is inputted into the plurality of sample removal models to respectively output verification removal results corresponding to the verification artifact image; verification loss values respectively corresponding to the plurality of sample removal models are determined based on pixel differences between the verification removal results and the verification reference image; and the sample weight model is trained based on the verification loss values.

For example, the verification reference image is a CT image obtained by performing CT scanning on a verification detection object, and the verification artifact image is a CT image including a metal artifact. The image content corresponding to the verification reference image and the image content corresponding to the verification artifact image are the same (for example: both the verification reference image and the verification artifact image are CT images obtained by performing CT scanning on the same abdomen, where the verification artifact image includes the metal artifact, and the verification reference image does not include the artifact).

In this embodiment, the verification reference image and the verification artifact image are an image pair in a verification sample.

In this embodiment, the verification artifact image and the artifact image belong to different CT images.

For example, the verification artifact image is inputted into the plurality of sample removal models. After the artifact is removed from the artifact image through the plurality of sample removal models, an image corresponding to the preset window range of the sample removal model is generated as a verification removal result. Each sample removal model corresponds to a verification removal result.

For example, the loss function is preset. Differences between pixel points between a plurality of verification removal results and the verification reference image are calculated through the loss function, and the differences are used as the verification loss values corresponding to the sample removal model. The plurality of sample removal models respectively correspond to a plurality of verification loss values.

In this embodiment, a preset loss function is implemented as $\mathcal{L}_b^{meta}(\Theta)$. An output result of the loss function is configured to represent a verification loss value corresponding to the $b^{th}$ sample removal model.

For example, second model parameters of the sample weight model are adjusted through the plurality of verification loss values.

In all embodiments of the present disclosure, during $s^{th}$ iterative training, gradient adjustment is performed on the second model parameters of the sample weight model based on verification loss values obtained in $(s-1)^{th}$ iterative training to obtain a sample weight model corresponding to the $s^{th}$ iterative training.

In this embodiment, training for the sample weight model includes training the sample weight model for N iterations (corresponding to the N iteration processes included in the foregoing DICD-Net network). That is, during N iterations, the sample weight model and the sample removal model are iteratively and alternately updated.

In the solutions of this application, the sample weight model is trained based on verification loss values corresponding to the plurality of sample removal models. A process of training the sample weight model for a single verification loss value is used as an example for description. For a manner of performing gradient adjustment for the second model parameter of the sample weight model, reference may be made to Formula 3:

$$\text{Formula 3: } \theta^{(s)} = \theta^{(s-1)} - \beta \sum_{b=1}^{B} \nabla_\theta \mathcal{L}_b^{meta}\left(\widehat{\Theta}^{(s-1)}(\theta)\right)\bigg|_{\theta^{(s-1)}}$$

$\theta^{(s)}$ represents a sample weight model corresponding to the $s^{th}$ iterative training, $\beta$ is a preset second learning rate, which is configured to represent an update step for training the sample weight model, and $\mathcal{L}_b^{meta}\left(\widehat{\Theta}^{(s-1)}(\theta)\right)$ represents a verification loss value corresponding to the $b^{th}$ sample removal model.

$\hat{\Theta}^{(s-1)}(\theta)$ is configured to represent a mapping function about $\theta$ in an $(s-1)^{th}$ iteration. Since a second model parameter $(\theta)$ is not updated during a current $s^{th}$ iterative training, a mapping function about $\theta$ is set to represent a mapping relationship between a first model parameter $(\Theta)$ corresponding to the sample removal model and a second model parameter $(\theta)$ corresponding to the sample weight model. That is, corresponding mapping relationships between the first model parameters and the second model parameters during the $(s-1)^{th}$ iterative training are determined based on the first model parameters obtained in the $(s-1)^{th}$ iterative training; and the verification loss values obtained in the $(s-1)^{th}$ iterative training are determined based on the mapping relationships.

For example, for a mapping function of $\theta$, for details, reference may be made to Formula 4:

Formula 4:

$$\widehat{\Theta}^{(s-1)}(\theta) = \Theta^{(s-1)} - \alpha \sum_{b=1}^{B} f^{meta}\left(\mathcal{L}_b(\Theta^{(s-1)}); \theta\right) \nabla_\Theta \mathcal{L}_b(\Theta)\Big|_{\Theta^{(s-1)}}$$

$\hat{\Theta}^{(s-1)}(\theta)$ is configured to represent a mapping function about $\theta$ in the (s-1)$^{th}$ iterative training, $\alpha$ represents a preset first learning rate, and $f^{meta}(\mathcal{L}_b(\Theta^{(s-1)}); \theta)$ is configured to represent a network structure corresponding to the sample weight model during the (s-1)$^{th}$ iterative training, that is, a network mapping function including $\theta$.

Operation 351: Determine weighted loss values respectively corresponding to the plurality of sample removal models based on the plurality of predicted loss values and weight adjustment parameters respectively corresponding to a plurality of loss values.

For example, for optimization goals of a plurality of DICD-Nets, the loss function may be preset and model parameters of the plurality of DICD-Nets may be separately adjusted to minimize a sum of outputted loss values of the loss function, that is, a final optimization goal of the artifact removal model. Therefore, for the loss function including the plurality of DICD-Nets in the artifact removal model, for details, reference may be made to Formula 5:

Formula 5: $\mathcal{L}^{train}(\Theta) = \Sigma_{b=1}^{B} W_b \mathcal{L}_b(\Theta)$

$\mathcal{L}^{train}(\Theta)$ is a sum of losses of predicted loss values respectively corresponding to B sample removal models (DICD-Net) included in a model, $\mathcal{L}_b(\Theta)$ is configured to represent a predicted loss value of an artifact image corresponding to a b$^{th}$ DICD-Net, and $W_b$ is configured to represent a weight adjustment parameter corresponding to a b$^{th}$ predicted loss value.

In the embodiments of this application, since the weight adjustment parameter corresponding to the sample removal model is obtained through the sample weight model, $W_b = f^{meta}(\mathcal{L}_b(\Theta); \theta)$, where $f^{meta}(\mathcal{L}; \theta)$ represents a network structure of the sample weight model, an input thereof is a predicted loss value $\mathcal{L}$, an output thereof is a weight adjustment parameter $W$, and a corresponding second model parameter in the network structure is $\theta$.

In this embodiment, $f^{meta}(\mathcal{L}_b(\Theta); \theta)$ is set to be a multi-layer perception (MLP) network including one hidden layer. For example, FIG. 7 is a schematic diagram of a network structure of a sample weight model according to an exemplary embodiment of this application. As shown in FIG. 7, an MLP network is currently displayed. The network includes an input layer 710, a hidden layer 720, and an output layer 730. The input layer is a predicted loss value 711, and the output layer 730 is a weight adjustment parameter 731 corresponding to the predicted loss value 711. The hidden layer 720 includes a plurality of neurons, and a number of neurons in the hidden layer 720 is limited according to actual needs.

In all embodiments of the present disclosure, during the s$^{th}$ iterative training, an s$^{th}$ weighted loss value is determined based on an (s-1)$^{th}$ predicted loss value and an s$^{th}$ weight adjustment parameter.

For example, the weighted loss value is configured to represent a corresponding predicted loss value of the sample removal model after weight adjustment is performed. For details, reference may be made to Formula 6:

Formula 6: $\mathcal{L}^{train}(\Theta) = \Sigma_{b=1}^{B} f^{meta}\left(\mathcal{L}_b(\Theta); \theta\right) \mathcal{L}_b(\Theta)$

$f^{meta}(\mathcal{L}_b(\Theta); \theta)$ is configured to represent a weight adjustment parameter corresponding to the predicted loss value, $\mathcal{L}_b(\Theta)$ is configured to represent the predicted loss value, and $\mathcal{L}^{train}(\Theta)$ is configured to represent a sum of losses of weighted loss values respectively corresponding to B sample removal models during single iterative training.

Operation 352: Respectively adjust first model parameters of the plurality of sample removal models based on the weighted loss values respectively corresponding to the plurality of sample removal models to obtain the plurality of artifact removal sub-models.

For example, the first model parameters of the plurality of sample removal models are performed gradient adjustment based on the plurality of weighted loss values to obtain adjusted parameters as model parameters corresponding to the artifact removal model, so that the artifact removal model is obtained. For a detailed training process, reference may be made Formula 7:

$$\text{Formula 7:} \quad \Theta^{(s)} = \Theta^{(s-1)} - \alpha \sum_{b=1}^{B} f^{meta}\left(\mathcal{L}_b\left(\Theta^{(s-1)}\right); \theta^{(s)}\right) \nabla_\Theta \mathcal{L}_b(\Theta)\Big|_{\Theta^{(s-1)}}$$

$\Theta^{(s-1)}$ is configured to represent the first model parameters obtained during the $(s-1)^{th}$ iterative training (for a plurality of first model parameters respectively corresponding to B sample removal models in a single iterative training), and

$f^{meta}(\mathcal{L}_b(\Theta^{(s-1)}); \theta^{(s)}) \nabla_\Theta \mathcal{L}_b(\Theta)|_{\Theta(s-1)}$ is configured to represent that gradient adjustment is performed on an $(s-1)^{th}$ first model parameter through weighted loss values corresponding to the $s^{th}$ iterative training, that is, based on the weighted loss values corresponding to the $s^{th}$ iterative training, gradient adjustment is performed on first model parameters obtained in the $(s-1)^{th}$ iterative training of the sample removal models to obtain first model parameters corresponding to the $s^{th}$ iterative training, and $(s+1)^{th}$ cyclical adjustment is performed until training of the artifact removal model ends, s being an integer greater than or equal to 1.

In the foregoing, during training for the sample weight model and the sample removal model, a corresponding training sequence is Formula 4 ($\theta$ is parameterized to obtain a mapping function about $\theta$), Formula 3 (gradient adjustment is performed on the second model parameter of the sample weight model), and Formula 7 (gradient adjustment is performed on the first parameter models respectively corresponding to plurality of sample removal models).

In this embodiment, for an adjustment effect condition of the sample removal model, a training objective corresponding to Formula 8 is given:

$$\text{Formula 8:} \quad \Theta^*(\theta) = arg_\Theta \min \mathcal{L}^{train}(\Theta; \theta) = arg_\Theta \min \Sigma_{b=1}^{B} f^{meta}\left(\mathcal{L}_b(\Theta); \theta\right) \mathcal{L}_b(\Theta)$$

$\Theta^*(\theta)$ is configured to represent an optimal solution corresponding to the plurality of first model parameters (that is, the first parameter that meets the adjustment effect condition), and the optimal solution of the plurality of first model parameters may be obtained by calculating a minimum value corresponding to the weighted loss value.

For example, for the second model parameter of the sample weight model, a training objective corresponding to Formula 9 may also be given:

$$\text{Formula 9:} \quad \theta^* = arg_\theta \min \mathcal{L}^{meta}(\Theta^*(\theta)) = arg_\Theta \min \Sigma_{b=1}^{B} \mathcal{L}_b^{meta}(\Theta^*(\theta))$$

$\theta^*$ is configured to represent an optimal solution of the second model parameter, and the optimal solution may be obtained by calculating a minimum value corresponding to the predicted loss value. When the second model parameter reaches the optimal solution (or is infinitely close to the optimal solution), the second model parameter is used as the second parameter obtained in a final training for the sample weight model.

Formula 8 and Formula 9 are only training objectives set for the sample removal model and the sample weight model. During actual training, a training process of the sample removal model and the sample weight model is performed iterative loop training in a specified order through Formula 4, Formula 3, and Formula 7.

For example, after the plurality of sample removal models are simultaneously trained, artifact sub-models respectively corresponding to the plurality of sample removal models are generated, that is, a single artifact sub-model corresponds to a single sample removal model.

**Operation 353**: Use a plurality of artifact removal sub-models as an artifact removal model.

For example, the artifact removal model includes a plurality of sample removal models that have completed training, that is, the artifact removal model includes the plurality of artifact removal sub-models.

In all embodiments of the present disclosure, a first model parameter obtained in a most recent adjustment can be determined as a first parameter in response to a number of cyclical iterative adjustment times of the first model parameter reaching a number-of-times threshold; or the first model parameter can be determined as a first parameter in response to an adjustment effect of the first model parameter meeting an adjustment effect condition, the adjustment effect condition being configured to represent a restriction requirement on the predicted loss value.

For example, the model parameter in the artifact removal model is the first parameter. In this embodiment, a training objective for the plurality of sample removal models is to use results obtained by performing gradient adjustment on the first model parameters respectively corresponding to the plurality of sample removal models as final first parameters corresponding to the artifact removal models.

In all embodiments of the present disclosure, the number-of-times threshold can be a preset specified number of times or may be set by yourself according to a training situation. For example: If the plurality of sample removal model is trained for 100 times, 100 times is the number-of-times threshold. When a number of cyclical iterative adjustments for the first model parameters of the plurality of sample removal models reaches 100 times, a plurality of first model parameters

obtained in 100th training are determined as the first parameters.

In all embodiments of the present disclosure, the adjustment effect condition can refer to that after gradient adjustment is performed on the plurality of sample removal models, and the artifact image is inputted and the predicted loss value between the artifact removal result outputted by the artifact image and the reference image meets the adjustment effect condition, the first model parameters respectively corresponding to the plurality of sample removal models are determined as the first parameters of an artifact removal network, that is, the first model parameters of this training meet the training objective of the sample removal model.

In summary, according to the method for training an artifact removal model provided in the embodiments of this application, the plurality of sample removal models are trained by using the reference image and the artifact image. During training, the artifact image is inputted into the plurality of sample removal models to obtain artifact removal results respectively, and the predicted loss values between the plurality of artifact removal results and the reference image are determined. After the predicted loss values are inputted into the sample weight model, the weight adjustment parameters corresponding to the predicted loss values are finally obtained. The plurality of sample removal models are trained based on the predicted loss values and the weight adjustment parameters to finally obtain the artifact removal model including the plurality of artifact removal sub-models. The plurality of sample removal models corresponding to different preset window ranges are trained by using the weight adjustment parameters and the predicted loss values, so that the artifact removal model finally obtained through training can output artifact removal images corresponding to the different window ranges, which meets artifact removal requirements of different images and improves artifact removal accuracy of the artifact removal results.

In this embodiment, the sample weight model is first trained, and then the predicted loss value is inputted into the sample weight model obtained by training to output the weight adjustment parameter, and gradient adjustment is performed on the first model parameters of the plurality of sample removal models based on the weight adjustment parameter and the plurality of predicted loss values. In this way, during iterative training, the sample weight model and the sample removal model are alternately and iteratively trained, and the sample weight model can be trained to assist in training the sample removal model, which improves accuracy and a training effect of model training.

In all embodiments of the present disclosure, different preset window ranges also include a process of window conversion. FIG. 3 is used as an example to describe an application of the solution of this application in the field of auxiliary diagnosis.

**Operation 310**: Obtain a reference image and an artifact image.

In all embodiments of the present disclosure, the reference image can be an image generated by scanning a sample detection object without an implant, the artifact image can be formed by introducing an artifact to the reference image, and the artifact can be a shadow caused by an implant during scanning of a sample detection object including the implant.

In all embodiments of the present disclosure, the artifact image can be a CT image synthesized from an authorized CT image obtained in advance in the public data set.

In this embodiment, for an obtaining process of the artifact image, first, a CT image that is not affected by metal in the public data set is used as the reference image, as well as different types of metal masks (Mask). Based on a data simulation process, the CT image and the metal mask are performed image synthesis to obtain the CT image including the metal artifact as training data.

In all embodiments of the present disclosure, a CT value corresponding to the training data can be cropped to obtain a CT image with a window range of [-1000,2000] HU. Then, the CT image can be converted into an attenuation coefficient and placed in the [0, 1] range, and finally converted to a CT image in a [0, 255] range.

In all embodiments of the present disclosure, each piece of training data can be randomly cropped into image blocks with a side length of 64×64, and then horizontal mirror flipping and vertical mirror flipping can be randomly performed with a probability of 0.5 to finally generate different artifact images.

In this embodiment, the reference image and the artifact image are implemented as a sample image pair.

For example, the plurality of sample removal models respectively correspond to different preset window ranges, which are configured to mark a contrast relationship displayed in each region of the scan image for different CT values. In this embodiment, three sample removal models are used as an example for description. That is, the three sample removal models included in this embodiment have their corresponding preset window ranges respectively [-1000, 2000] HU, [-320, 480] HU, and [-160, 240] HU. This is not limited herein.

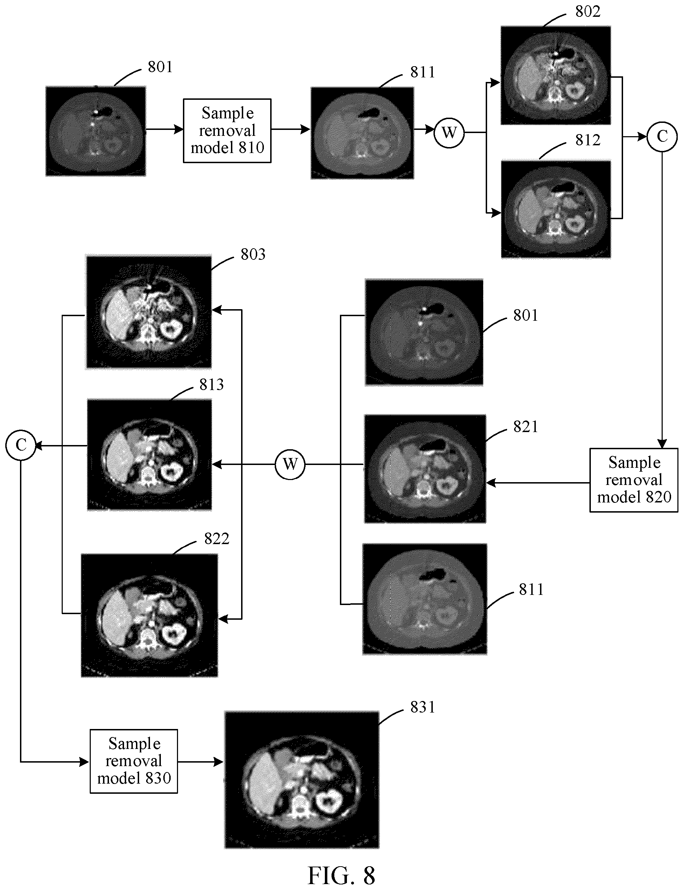

For example, FIG. 8 is a schematic diagram of a plurality of sample removal models according to an exemplary embodiment of this application. As shown in FIG. 8, a schematic diagram of a multi-window sample removal model is currently displayed. The multi-window sample removal model includes a sample removal model 810, a sample removal model 820, and a sample removal model 830 that are respectively corresponding to three different preset window ranges. The sample removal model is implemented as a model with a DICD-Net structure. Therefore, the sample removal model 810 is DICD-Net (b=1) corresponding to a first preset window range ([-1000, 2000] HU), the sample removal model 820 is DICD-Net (b=2) corresponding to a second preset window range ([-320, 480] HU), and the sample removal model 830 is DICD-Net (b=3) corresponding to a third preset window range ([-160, 240] HU).

In all embodiments of the present disclosure, the artifact image 801 can be inputted into the sample removal model 810 to output a first predicted region 811 corresponding to the sample removal model 810, where the first predicted region 811 is configured to represent a CT image generated by removing the metal artifact in the artifact image 801 by using the sample removal model 810 based on the first preset window range.

For example, before the artifact image is inputted into the sample removal model, the artifact image also has a corresponding preset window range. Therefore, when the preset window range of the artifact image and the preset window range of the inputted sample removal model belong to different window ranges, the artifact image needs to be performed window conversion before inputting the sample removal model to generate an artifact image consistent with the preset window range corresponding to the sample removal model.

As shown in FIG. 8, the artifact image 801 and the first predicted region 811 are inputted into a window conversion layer (Window Layer, marked as W in FIG. 8) for window conversion to obtain a first sample conversion result 802 corresponding to the artifact image 801 and a first predicted conversion result 812 corresponding to the first predicted region 811. The window range corresponding to the first sample conversion result 802 and the first predicted conversion result 812 is consistent with the preset window range of the sample removal model 820. The first predicted region 811 and the first predicted conversion result 812 are inputted into a channel concatenation layer (Channel Concatenation, marked C in FIG. 8). A first fusion result is inputted into the sample removal model 820 to output a second predicted region 821 corresponding to the sample removal model 820. The artifact image 801, the first predicted region 811, and the second predicted region 821 are inputted into the window conversion layer for window conversion to obtain a second sample conversion result 803 corresponding to the artifact image 801, a second predicted conversion result 813 corresponding to the first predicted region 811, and a third predicted conversion result 822 corresponding to the second predicted region 821. After the second sample conversion result 803, the second predicted conversion result 813, and the third predicted conversion result 822 are inputted to the channel concatenation layer, the sample removal model 830 is inputted to output a third predicted region 831 corresponding to the sample removal model 830.

In all embodiments of the present disclosure, a window range corresponding to an $i^{th}$ sample removal model can be determined, i being a positive integer; and window conversion is performed on the artifact image and an $(i-1)^{th}$ artifact removal result to obtain a window conversion result corresponding to both the artifact image and the $(i-1)^{th}$ artifact removal result as a model input of the $i^{th}$ sample removal model.

For example, for a window conversion process, reference may be made to Formula 10 to Formula 12 in the following:

$$\text{Formula 10: } X_{ori} = X_{curr} \times (H_{curr} - L_{curr}) + L_{curr}$$

$$\text{Formula 11: } X_{clip} = Clip\left(X_{ori}; [L_{next}, H_{next}]\right)$$

$$\text{Formula 12: } X_{next} = \frac{X_{clip} - L_{next}}{H_{next} - L_{next}}$$

$X_{ori}$ is configured to represent an original image, $X_{curr}$ and $X_{next}$ respectively represent corresponding scan images before and after window conversion, and $[L_{curr}, H_{curr}]$ and $[L_{next}, H_{next}]$ respectively represent corresponding preset window ranges before and after window conversion (L represents a window level, and H represents a window height).

**Operation 320**: Input the artifact image into a plurality of sample removal models to obtain artifact removal results respectively.

In all embodiments of the present disclosure, the plurality of sample removal models correspond to different preset window ranges, and each of the sample removal models can be configured to remove the artifact in the artifact image based on a corresponding preset window range.

In this embodiment, three artifact removal results are respectively outputted based on the sample removal models with different preset window ranges. Pixel distances between the three artifact removal results and the reference image are respectively calculated through the preset loss function $\mathcal{L}_{b(\Theta)}$ to output three predicted loss values, namely $\mathcal{L}_{1(\Theta)}$, $\mathcal{L}_{2(\Theta)}$, and $\mathcal{L}_{3(\Theta)}$

**Operation 330:** Determine predicted loss values each respectively corresponding to one of the plurality of sample removal models based on a pixel difference between the respective artifact removal result and the reference image.

In all embodiments of the present disclosure, the three predicted loss values can be respectively inputted into the sample weight model to output three weight adjustment parameters, where the sample weight model is implemented as $f_{meta}(\mathcal{L}_b(\Theta); \theta)$.

**Operation 340**: Input the predicted loss values into a sample weight model to output weight adjustment parameters respectively.

In all embodiments of the present disclosure, each of the weight adjustment parameters can be configured to perform weight adjustment on a parameter update of a corresponding sample removal model.

In this embodiment, based on the three predicted loss values and three weight adjustment parameters respectively corresponding to the three predicted loss values, the three sample removal models are simultaneously trained to obtain three artifact removal sub-models, and the three artifact removal sub-models are used as a final artifact removal network (Mar Network).

In this embodiment, during training for the plurality of sample removal models, training processes of the plurality of sample removal models and the sample weight model are iteratively and alternately performed. That is, the first model parameters of the plurality of sample removal models and the second model parameters of the sample weight model are alternately updated, and parameter adjustment is performed on the first model parameters through updated second model parameters.

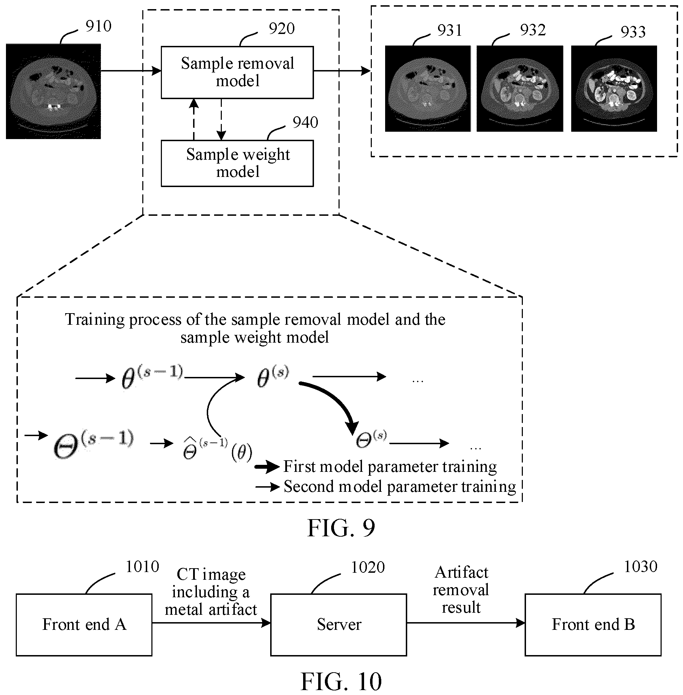

For example, FIG. 9 is a schematic diagram of a method for training an artifact removal model according to an exemplary embodiment of this application. As shown in FIG. 9, the artifact image 910 is inputted into the sample removal model 920 (including three, and a number of models is not shown in the figure) to output the artifact removal result 931, the artifact removal result 932, and the artifact removal result 933. The sample removal model 920 and the sample weight model 940 are alternately trained.

As shown in FIG. 9, for an $s^{th}$ iterative training process, the first model parameter ($\Theta^{(s-1)}$) and the second model parameter ($\theta^{(s-1)}$) are currently obtained by $(s-1)^{th}$ iterative training. First, according to the foregoing Formula 4, a mapping function $\hat{\Theta}^{(s-1)}(\theta)$ about $\theta$ obtained by the $(s-1)^{th}$ iterative training is determined based on the first model parameters obtained by the $(s-1)^{th}$ iterative training. Then, according to the foregoing Formula 3, a verification loss value obtained by the $(s-1)^{th}$ iterative training is determined based on the mapping function $\hat{\Theta}^{(s-1)}(\theta)$ about $\theta$ obtained by the $(s-1)^{th}$ iterative training, gradient adjustment is performed on $\theta^{(s-1)}$ based on the verification loss value obtained by the $(s-1)^{th}$ iterative training to obtain a corresponding second model parameter ($\theta^{(s)}$) after the $(s-1)^{th}$ iterative training, the sample weight model corresponding to the $s^{th}$ iterative training is determined based on $\theta^{(s)}$, and the predicted loss value obtained by the $(s-1)^{th}$ iterative training is inputted into the sample weight model corresponding to the $s^{th}$ iterative training to obtain a corresponding weight adjustment parameter after the $s^{th}$ iterative training. According to Formula 7, based on the predicted loss value obtained by the $(s-1)^{th}$ iterative training and the weight adjustment parameter corresponding to the $s^{th}$ iterative training, the weighted loss value corresponding to the $s^{th}$ iterative training is determined for performing gradient adjustment on $\Theta^{(s-1)}$ to obtain the second model parameter ($\Theta^{(s)}$) corresponding to the $s^{th}$ iterative training. In this way, cyclical iterative training is performed until the sample removal model training ends.

When first iterative training is performed, both the first model parameter and the second model parameter are preset initial values.

In all embodiments of the present disclosure, a first learning attenuation rate can be obtained, the first learning attenuation rate being configured to adjust a first learning rate in a form of attenuation based on a number of iterations, the first learning rate being a preset update step for training the plurality of sample removal models; and during training for the plurality of sample removal models, gradient descent can be performed on the first learning rate based on the first learning attenuation rate to obtain a target learning rate corresponding to the artifact removal model.

In this embodiment, for training of the sample removal model, the first learning rate is set to $2\times10^{-4}$, and the first learning attenuation rate is set every 30 epochs. The first learning rate attenuates by 0.5, and a total number of training epochs is 200. During each iterative training, a batch size is 16, and a sample CT image block size is $64\times64$. When the first learning rate is performed gradient descent through the first learning attenuation rate, if a number of epochs reaches a preset number (200), a first learning rate obtained in the last gradient descent is used as a target learning rate of the sample removal model.

In this embodiment, the second learning rate is set to $1\times10^{-5}$ for the sample weight model, and a number of neurons corresponding to the hidden layer is 100.

For example, FIG. 10 is a schematic diagram of a processing process of an artifact removal model according to an exemplary embodiment of this application. As shown in FIG. 10, a current processing system includes a front end A1010 (for example: a CT scanner), a server 1020, and a front end B1030 (for example: a computer terminal or a mobile phone terminal).

After the front end A1010 performs CT scanning on the target detection object, if metal is implanted in the target detection object, a CT image generated by the current front end A1010 includes a metal artifact region caused by the metal.

In all embodiments of the present disclosure, the CT image can be inputted into the artifact removal model in the server 1020 to perform artifact removal on the CT image. The identified metal artifact region is removed to generate a CT image with non-metal artifact under different preset window ranges, and the CT image is fed back to the front end B1030 for a doctor to assist in diagnosis.

In summary, according to the method for training an artifact removal model provided in the embodiments of this application, the plurality of sample removal models are trained by using the reference image and the artifact image. During training, the artifact image is inputted into the plurality of sample removal models to obtain artifact removal results respectively, and the predicted loss values between the plurality of artifact removal results and the reference image are determined. After the predicted loss values are inputted into the sample weight model, the weight adjustment parameters corresponding to the predicted loss values are finally obtained. The plurality of sample removal models are trained based on the predicted loss values and the weight adjustment parameters to finally obtain the artifact removal model including the plurality of artifact removal sub-models. The plurality of sample removal models corresponding to different preset window ranges are trained by using the weight adjustment parameters and the predicted loss values, so that the artifact removal model finally obtained through training can output artifact removal images corresponding to the different window ranges, which meets artifact removal requirements of different images and improves artifact removal accuracy of the artifact removal results.

In this embodiment, for a manner of training the plurality of sample removal models based on the plurality of window ranges, the plurality of sample removal models with different window ranges are enabled to be simultaneously trained to finally obtain the artifact removal model that can output artifact removal results in different window ranges, which can better improve a training effect of the model.

In this embodiment, images in different window ranges are converted through window conversion, which enables better model learning between different window ranges and improves accuracy and flexibility of model training.

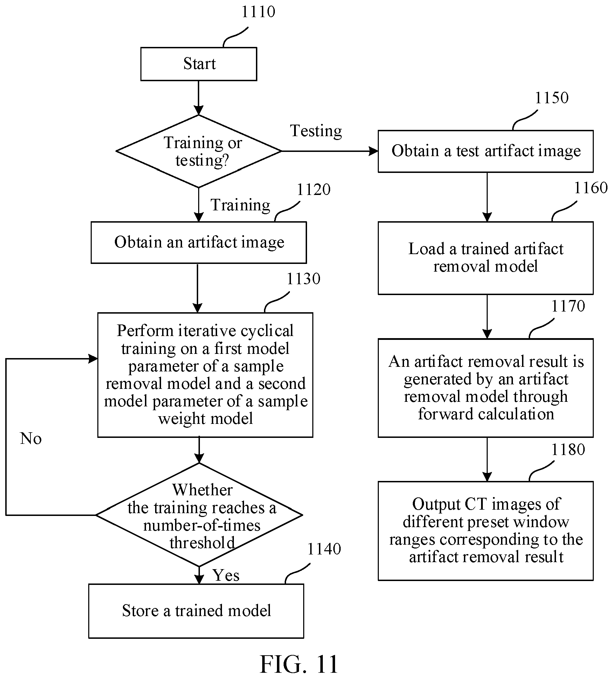

FIG. 11 is a schematic diagram of a method for training an artifact removal model according to an exemplary embodiment of this application. As shown in FIG. 11, the method includes the following operations:

**Operation 1110**: Start.

For example, the method for training an artifact removal model provided in this application is performed by the server. Currently, after a training request is transmitted to the server, the server starts to perform a training process for the artifact removal model.

In all embodiments of the present disclosure, the server can first determine whether it is currently in a training stage or a testing stage. If it is in the training stage, operation 1120 is performed. If it is in the testing stage, operation 1150 is performed.

**Operation 1120:** Obtain the artifact image.

In this embodiment, the artifact image refers to the CT image including the metal artifact. The artifact image is a CT image including the metal artifact that is synthesized through a data simulation process by obtaining the reference image from the public data set, and combined with different metal mask information, and is used as training data. The reference image and the artifact image correspond to the same image content, that is, the reference image and the artifact image are implemented as a sample image pair.

**Operation 1130**: Perform iterative loop training on the first model parameter of the sample removal model and the second model parameter of the sample weight model.

In this embodiment, gradient adjustment is simultaneously performed on the first model parameters respectively corresponding to the three sample removal models.

In this embodiment, the artifact image is inputted into the three sample removal models to output three artifact removal results.

Based on pixel differences between the three artifact removal results and the reference image, the predicted loss values respectively corresponding to the three sample removal models are determined through the preset loss function $\mathcal{L}_b(\Theta)$.

The three predicted loss values are respectively inputted into the sample weight model $f^{meta}(\mathcal{L}_b(\Theta);\theta)$ to output the weight adjustment parameters respectively corresponding to the three predicted loss values, namely $W_1$, $W_2$, and $W_3$.

Based on the predicted loss values and the weight adjustment parameters, during cyclical iterative training, according to the foregoing Formula 4, Formula 3, and Formula 7 in sequence, back propagation is performed on the sample weight model and the three sample removal models, and gradient adjustments are successively performed on the second model parameters of the sample weight model and the first model parameters respectively corresponding to the three sample removal models.

When a number of cyclical iterative training for the first model parameter reaches the number-of-times threshold, operation 1140 is performed, otherwise operation 1130 is continued.

**Operation 1140:** Store a trained model.

When the number of cyclical iterative training for the first model parameter reaches the number-of-times threshold, a plurality of first model parameters obtained in the last training are used as first parameters to determine the artifact removal model, where the artifact removal model includes three trained artifact removal sub-models.

The server stores the trained artifact removal model.

**Operation 1150:** Obtain a test artifact image.

When the server determines that a current stage is the test stage, a test artifact image including the metal artifact is obtained, where the test artifact image is implemented as a CT image configured to test an effect of the trained artifact removal model.

**Operation 1160:** Load a trained artifact removal model.

After obtaining the test artifact image, the server loads the stored artifact removal model that is trained.

**Operation 1170:** The artifact removal result is generated by the artifact removal model through forward calculation.

The test artifact image is inputted into the artifact removal model, and forward calculation is performed on the test artifact image to obtain the artifact removal result corresponding to the test artifact image. The artifact removal result refers to generating a CT image within a preset window range after the artifact is removed from the test artifact image.

**Operation 1180:** Output CT images of different preset window ranges corresponding to the artifact removal result.

The artifact removal results that are obtained by simultaneously outputted by the artifact removal model and for three different preset window ranges are outputted.

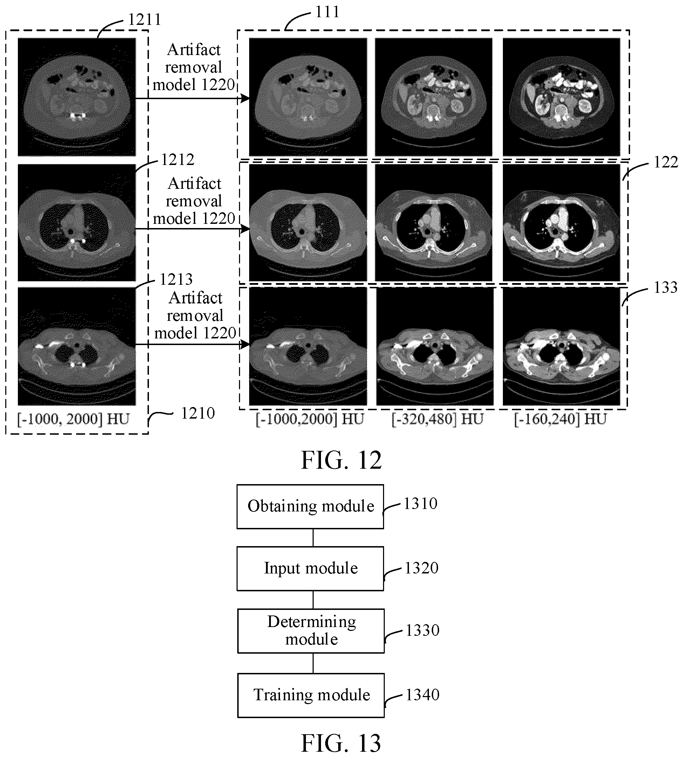

In this embodiment, three finally trained artifact removal sub-models are used as the artifact removal model. That is, after the target image is currently inputted into the artifact removal model, three artifact removal results corresponding to different preset window ranges are simultaneously outputted. For example, FIG. 12 is a schematic diagram of an application process of an artifact removal model according to an exemplary embodiment of this application. As shown in FIG. 12, when the target image 1210 (in this embodiment, abdominal CT images in three different display modes for the same abdominal tissue in the same window range are provided, namely an image 1211, an image 1212, and an image 1213) is inputted into the artifact removal model 1220, artifact removal results (including three artifact removal results 111 corresponding to the image 1211, three artifact removal results 122 corresponding to the image 1212, and three artifact removal results 133 corresponding to the image 1213) for three different window ranges are simultaneously outputted. The artifact removal result is configured to assist the doctor in diagnosing abdominal tissues.

In summary, according to the method for training an artifact removal model provided in the embodiments of this application, the plurality of sample removal models are trained by using the reference image and the artifact image whose image content matches. During training, the artifact image is inputted into the plurality of sample removal models to respectively output the plurality of artifact removal results, and the predicted loss values between the plurality of artifact removal results and the reference image are determined. After the predicted loss values are inputted into the sample weight model, the weight adjustment parameters corresponding to the predicted loss values are finally obtained. The plurality of sample removal models are trained based on the predicted loss values and the weight adjustment parameters to finally obtain the artifact removal model including the plurality of artifact removal sub-models. The plurality of sample removal models corresponding to different preset window ranges are trained by using the weight adjustment parameters and the predicted loss values, so that the artifact removal model finally obtained through training can output artifact removal images corresponding to the different window ranges, which meets artifact removal requirements of different images and improves artifact removal accuracy of the artifact removal results.

Beneficial effects provided in this application are as follows:

1. A designed sample removal model (DICD-Net) has good interpretability, which allows a user to have a good understanding of a function of each module in a model.

2. The sample weight model is introduced between different window ranges, so that a reconstruction and restoration learning process of different window ranges is more flexible, which has better potential to fully improve fidelity of the tissue structure.

3. Reconstructed and restored CT images of different contrasts (artifact removal results) are conducive to more detailed observation of different tissues and organs, thereby better facilitating a subsequent diagnosis.

FIG. 13 is a structural block diagram of an apparatus for training an artifact removal model according to an exemplary embodiment of this application. As shown in FIG. 13, the apparatus can include the following parts:

an obtaining module 1310, configured to obtain a reference image and an artifact image, the reference image being an image generated after a sample detection object without an implant is scanned, the artifact image being formed by introducing an artifact to the reference image, and the artifact being a shadow caused by the implant during scanning of a sample detection object including the implant, that is, the artifact is a shadow of the implant generated during scanning;

an input module 1320, configured to input the artifact image into a plurality of sample removal models to obtain artifact removal results respectively, the plurality of sample removal models corresponding to different preset window ranges, and each of the sample removal models being configured to remove the artifact in the artifact image based on a corresponding preset window range;

a determining module 1330, configured to determine predicted loss values each respectively corresponding to one of the plurality of sample removal models based on a pixel difference between the respective artifact removal result and the reference image,

the input module 1320 being further configured to input the predicted loss values into a sample weight model to output weight adjustment parameters respectively, each of the weight adjustment parameters being configured to perform weight adjustment on a parameter update of a corresponding sample removal model; and

a training module 1340, configured to train the plurality of sample removal models based on the predicted loss values and the weight adjustment parameters to obtain an artifact removal model including a plurality of artifact removal sub-models, each of the artifact removal sub-models being configured to perform artifact removal on a target image based on a corresponding preset window range.

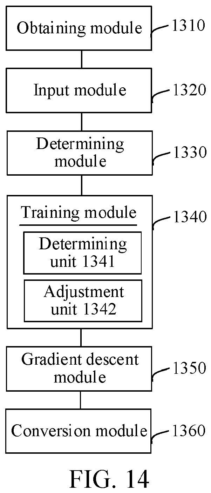

In all embodiments of the present disclosure, as shown in FIG. 14, the training module 1340 can include:

a determining unit 1341, configured to determine weighted loss values respectively corresponding to the plurality of sample removal models based on the plurality of predicted loss values and weight adjustment parameters respectively corresponding to a plurality of loss values; and

an adjustment unit 1342, configured to respectively adjust first model parameters of the plurality of sample removal models based on the weighted loss values respectively corresponding to the plurality of sample removal models to obtain the plurality of artifact removal sub-models,

the determining unit 1341 being further configured to use the plurality of artifact removal sub-models as the artifact removal model.

In all embodiments of the present disclosure, the determining unit 1341 can be further configured to determine, during $s^{th}$ iterative training, weighted loss values corresponding to the $s^{th}$ iterative training based on predicted loss values obtained in $(s-1)^{th}$ iterative training and weight adjustment parameters obtained in the $s^{th}$ iterative training; and
In all embodiments of the present disclosure, the adjusting unit 1342 can be further configured to perform, based on weighted loss values corresponding to the $s^{th}$ iterative training, gradient adjustment on the first model parameters obtained in the $(s-1)^{th}$ iterative training of the sample removal model to obtain first model parameters corresponding to the $s^{th}$ iterative training, and perform $(s+1)^{th}$ cyclical adjustment until training of the artifact removal model ends, s being an integer greater than or equal to 1.
In all embodiments of the present disclosure, the input module 1320 can be further configured to input the predicted loss values obtained in the $(s-1)^{th}$ iterative training into a sample weight model obtained in the $s^{th}$ iterative training to output weight adjustment parameters corresponding to the $s^{th}$ iterative training.

In all embodiments of the present disclosure, the obtaining module 1310 can be further configured to obtain a verification reference image and a verification artifact image whose image content matches;

In all embodiments of the present disclosure, the input module 1320 can be further configured to input the verification artifact image into a plurality of sample removal models to respectively output verification removal results corresponding to the verification artifact image;

In all embodiments of the present disclosure, the determining module 1330 can be further configured to determine verification loss values respectively corresponding to the plurality of sample removal models based on pixel differences between the verification removal results and the verification reference image; and

In all embodiments of the present disclosure, the training module 1340 can be further configured to train the sample weight model based on the verification loss values.

In all embodiments of the present disclosure, the training module 1340 can be further configured to perform, during the $s^{th}$ iterative training, gradient adjustment on second model parameters of the sample weight model based on verification loss values obtained in the $(s-1)^{th}$ iterative training to obtain a sample weight model corresponding to the $s^{th}$ iterative training.

In all embodiments of the present disclosure, the determining module 1330 can be further configured to: determine corresponding mapping relationships between the first model parameters and the second model parameters during the $(s-1)^{th}$ iterative training based on the first model parameters obtained in the $(s-1)^{th}$ iterative training; and determine the verification loss values obtained in the $(s-1)^{th}$ iterative training based on the mapping relationships.

In all embodiments of the present disclosure, the determining module 1330 can be further configured to: determine a first model parameter obtained in a most recent adjustment as a first parameter in response to a number of cyclical iterative adjustment times of the first model parameter reaching a number-of-times threshold; or determine the first model parameter as a first parameter in response to an adjustment effect of the first model parameter meeting an adjustment effect condition, the adjustment effect condition being configured to represent a restriction requirement on the predicted loss value.

In all embodiments of the present disclosure, the obtaining module 1310 can be further configured to obtain a first learning attenuation rate, the first learning attenuation rate being configured to adjust a first learning rate in a form of attenuation based on a number of iterations, the first learning rate being a preset update step for training the plurality of sample removal models; and

In all embodiments of the present disclosure, the apparatus can further include:

a gradient descent module 1350, configured to perform, during training for the plurality of sample removal models, gradient descent on the first learning rate based on the first learning attenuation rate to obtain a target learning rate corresponding to the artifact removal model.

In all embodiments of the present disclosure, the determining module 1330 can be further configured to determine a window range corresponding to an $i^{th}$ sample removal model, i being a positive integer; and

In all embodiments of the present disclosure, the apparatus can further include:

a conversion module 1360, configured to perform window conversion on the artifact image and an $(i-1)^{th}$ artifact removal result to obtain a window conversion result corresponding to both the artifact image and the $(i-1)^{th}$ artifact removal result as a model input of the $i^{th}$ sample removal model.

In summary, according to the apparatus for training an artifact removal model provided in the embodiments of this application, the plurality of sample removal models are trained by using the reference image and the artifact image. During training, the artifact image is inputted into the plurality of sample removal models to obtain artifact removal results respectively, and the predicted loss values between the plurality of artifact removal results and the reference image are determined. After the predicted loss values are inputted into the sample weight model, the weight adjustment parameters corresponding to the predicted loss values are finally obtained. The plurality of sample removal models are trained based on the predicted loss values and the weight adjustment parameters to finally obtain the artifact removal model including the plurality of artifact removal sub-models. The plurality of sample removal models corresponding to different preset window ranges are trained by using the weight adjustment parameters and the predicted loss values, so that the artifact removal model finally obtained through training can output artifact removal images corresponding to the different window ranges, which meets artifact removal requirements of different images and improves artifact removal accuracy of the artifact removal results.

The apparatus for training an artifact removal model provided in the foregoing embodiments is merely illustrated with an example of division of each functional module. In practical application, the function distribution may be implemented by different functional modules according to requirements, that is, an internal structure of the device is divided into different functional modules, to implement all or some of the functions described above. In addition, embodiments of the apparatus for training an artifact removal model and embodiments of the method for training an artifact removal model provided in the foregoing embodiments belong to one conception. For the specific implementation process, reference may be made to the method embodiments, and details are not described herein again.

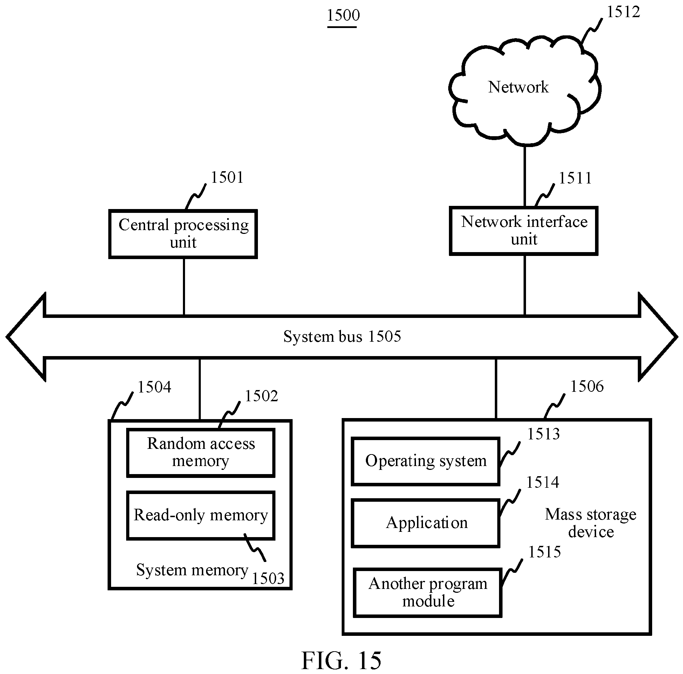

FIG. 15 is a schematic structural diagram of a server according to an exemplary embodiment of this application.

In all embodiments of the present disclosure, the server 1500 can include a central processing unit (CPU) 1501, a system memory 1504 including a random access memory (RAM) 1502 and a read only memory (ROM) 1503, and a system bus 1505 connecting the system memory 1504 to the CPU 1501. The server 1500 further includes a mass storage device 1506 configured to store an operating system 1513, an application 1514, and another program module 1515.

In all embodiments of the present disclosure, the mass storage device 1506 can be connected to the CPU 1501 by using a mass storage controller (not shown) connected to the system bus 1505. The mass storage device 1506 and a computer-readable medium associated with the mass storage device 1506 provide non-volatile storage for the server 1500. That is, the mass storage device 1506 may include a computer-readable medium (not shown) such as a hard disk or a compact disc read only memory (CD-ROM) drive.

Generally, the computer-readable medium may include a computer storage medium and a communication medium. The computer storage medium includes volatile and non-volatile, removable and non-removable media that are configured to store information such as computer-readable instructions, data structures, program modules, or other data and that are implemented by using any method or technology. The computer storage medium includes a RAM, a ROM, an erasable programmable read only memory (EPROM), an electrically erasable programmable read only memory (EEPROM), a flash memory or another solid-state memory technology, a CD-ROM, a digital versatile disc (DVD) or another optical memory, a tape cartridge, a magnetic cassette, a magnetic disk memory, or another magnetic storage device. Certainly, a person skilled in the art may know that the computer storage medium is not limited to the foregoing several types. The foregoing system memory 1504 and mass storage device 1506 may be collectively referred to as a memory.

According to various embodiments of this application, the server 1500 may further be connected, by using a network such as the Internet, to a remote computer on the network and run. That is, the server 1500 may be connected to a network 1512 by using a network interface unit 1511 that is connected to the system bus 1505, or may be connected to a network of another type or a remote computer system (not shown) by using the network interface unit 1511.

The foregoing memory further includes one or more programs. The one or more programs are stored in the memory and are configured to be executed by the CPU.

An embodiment of this application further provides a computer device. The computer device includes a processor and a memory, the memory storing at least one instruction, at least one program, a code set or an instruction set, the at least one instruction, the at least one program, the code set or the instruction set being loaded and executed by the processor to implement the method for training an artifact removal model according to the foregoing method embodiments.

An embodiment of this application further provides a computer-readable storage medium. The computer-readable storage medium stores at least one instruction, at least one program, a code set or an instruction set, the at least one instruction, the at least one program, the code set or the instruction set being loaded and executed by the processor to implement the method for training an artifact removal model according to the foregoing method embodiments.

An embodiment of this application further provides a computer program product or a computer program. The computer program product or the computer program includes computer instructions, the computer instructions being stored in a computer-readable storage medium. A processor of a computer device reads the computer instructions from the computer-readable storage medium. The processor executes the computer instructions, so that the computer device performs the method for training an artifact removal model according to any one of the foregoing embodiments.

**Claims**

1. A method for training an artifact removal model, the method being performed by a computer device, the method comprising:

    obtaining a reference image and an artifact image, the reference image being generated by scanning a sample detection object without an implant, the artifact image being formed by introducing an artifact to the reference image, and the artifact being a shadow of the implant generated during scanning;
    inputting the artifact image into a plurality of sample removal models to obtain artifact removal results respectively, the plurality of sample removal models corresponding to different preset window ranges, and each of the sample removal models being configured to remove the artifact in the artifact image based on a corresponding preset window range;
    determining predicted loss values each respectively corresponding to one of the plurality of sample removal models based on a pixel difference between the respective artifact removal result and the reference image;
    inputting the predicted loss values into a sample weight model to output weight adjustment parameters respectively, each of the weight adjustment parameters being configured to perform weight adjustment on a parameter update of a corresponding sample removal model; and
    training the plurality of sample removal models based on the predicted loss values and the weight adjustment parameters to obtain an artifact removal model comprising a plurality of artifact removal sub-models, each of the artifact removal sub-models being configured to perform artifact removal on a target image based on a corresponding preset window range.

2. The method according to claim 1, wherein the training the plurality of sample removal models based on the predicted loss values and the weight adjustment parameters to obtain an artifact removal model comprising a plurality of artifact removal sub-models comprises:

    determining weighted loss values respectively corresponding to the plurality of sample removal models based on the plurality of predicted loss values and weight adjustment parameters respectively corresponding to a plurality of loss values;

respectively adjusting first model parameters of the plurality of sample removal models based on the weighted loss values respectively corresponding to the plurality of sample removal models to obtain the plurality of artifact removal sub-models; and

using the plurality of artifact removal sub-models as the artifact removal model.

3. The method according to claim 2, wherein the determining weighted loss values based on the predicted loss values and the weight adjustment parameters comprises:

during $s^{th}$ iterative training, determining weighted loss values corresponding to $s^{th}$ iterative training based on a predicted loss value obtained in $(s-1)^{th}$ iterative training and weight adjustment parameters obtained in the $s^{th}$ iterative training; and

the adjusting first model parameters of the sample removal models based on the weighted loss values to obtain the artifact removal model comprises:

performing, based on weighted loss values corresponding to the $s^{th}$ iterative training, gradient adjustment on first model parameters obtained in the $(s-1)^{th}$ iterative training of the sample removal models to obtain first model parameters corresponding to the $s^{th}$ iterative training, and performing $(s+1)^{th}$ cyclical adjustment until training of the artifact removal model ends, s being an integer greater than or equal to 1.

4. The method according to claim 3, wherein the inputting the predicted loss values into a sample weight model to output weight adjustment parameters comprises:
inputting the predicted loss values obtained in the $(s-1)^{th}$ iterative training into a sample weight model obtained in the $s^{th}$ iterative training to output weight adjustment parameters corresponding to the $s^{th}$ iterative training.

5. The method according to any one of claims 1 to 4, wherein before the inputting the predicted loss values into a sample weight model to output weight adjustment parameters, the method further comprises:

obtaining a verification reference image and a verification artifact image whose image content matches;
inputting the verification artifact image into a plurality of sample removal models to respectively output verification removal results corresponding to the verification artifact image;
determining verification loss values respectively corresponding to the plurality of sample removal models based on pixel differences between the verification removal results and the verification reference image; and
training the sample weight model based on the verification loss values.

6. The method according to claim 5, wherein the training the sample weight model based on the verification loss value comprises:
during $s^{th}$ iterative training, performing gradient adjustment on second model parameters of the sample weight model based on verification loss values obtained in the $(s-1)^{th}$ iterative training to obtain a sample weight model corresponding to the $s^{th}$ iterative training.

7. The method according to claim 6, wherein before the performing gradient adjustment on second model parameters of the sample weight model based on verification loss values obtained in the $(s-1)^{th}$ iterative training to obtain a sample weight model corresponding to the $s^{th}$ iterative training, the method further comprises:

determining corresponding mapping relationships between the first model parameters and the second model parameters during the $(s-1)^{th}$ iterative training based on the first model parameters obtained in the $(s-1)^{th}$ iterative training; and
determining the verification loss values obtained in the $(s-1)^{th}$ iterative training based on the mapping relationships.

8. The method according to any one of claims 1 to 4, further comprising:

determining a first model parameter obtained in a most recent adjustment as a first parameter in response to a number of cyclical iterative adjustment times of the first model parameter reaching a number-of-times threshold; or
determining the first model parameter as a first parameter in response to an adjustment effect of the first model parameter meeting an adjustment effect condition, the adjustment effect condition being configured to represent a restriction requirement on the predicted loss value.

9. The method according to any one of claims 1 to 4, further comprising:

obtaining a first learning attenuation rate, the first learning attenuation rate being configured to adjust a first learning rate in a form of attenuation based on a number of iterations, the first learning rate being a preset update step for training the plurality of sample removal models; and

during training for the plurality of sample removal models, performing gradient descent on the first learning rate based on the first learning attenuation rate to obtain a target learning rate corresponding to the artifact removal model.

10. The method according to any one of claims 1 to 4, further comprising:

determining a window range corresponding to an $i^{th}$ sample removal model, i being a positive integer; and

performing window conversion on the artifact image and an $(i-1)^{th}$ artifact removal result to obtain a window conversion result corresponding to both the artifact image and the $(i-1)^{th}$ artifact removal result as a model input of the $i^{th}$ sample removal model.

11. An apparatus for training an artifact removal model, comprising:

an obtaining module, configured to obtain a reference image and an artifact image, the reference image being generated by scanning a sample detection object without an implant, the artifact image being formed by introducing an artifact to the reference image, and the artifact being a shadow of the implant generated during scanning;

an input module, configured to input the artifact image into a plurality of sample removal models to obtain artifact removal results respectively, the plurality of sample removal models corresponding to different preset window ranges, and each of the sample removal models being configured to remove the artifact in the artifact image based on a corresponding preset window range;

a determining module, configured to determine predicted loss values each respectively corresponding to one of the plurality of sample removal models based on a pixel difference between the respective artifact removal result and the reference image;

the input module being configured to input the predicted loss values into a sample weight model to output weight adjustment parameters respectively, each of the weight adjustment parameters being configured to perform weight adjustment on a parameter update of a corresponding sample removal model; and

a training module, configured to train the plurality of sample removal models based on the predicted loss values and the weight adjustment parameters to obtain an artifact removal model comprising a plurality of artifact removal sub-models, each of the artifact removal sub-models being configured to perform artifact removal on a target image based on a corresponding preset window range.

12. The apparatus according to claim 11, wherein the training module comprises:

a determining unit, configured to determine weighted loss values respectively corresponding to the plurality of sample removal models based on the plurality of predicted loss values and weight adjustment parameters respectively corresponding to a plurality of loss values; and

an adjustment unit, configured to respectively adjust first model parameters of the plurality of sample removal models based on the weighted loss values respectively corresponding to the plurality of sample removal models to obtain the plurality of artifact removal sub-models,

the determining unit being further configured to use the plurality of artifact removal sub-models as the artifact removal model.

13. The apparatus according to claim 12, wherein the determining unit is further configured to determine, during $s^{th}$ iterative training, weighted loss values corresponding to the $s^{th}$ iterative training based on predicted loss values obtained in $(s-1)^{th}$ iterative training and weight adjustment parameters obtained in the $s^{th}$ iterative training; and

the adjusting unit is further configured to perform, based on weighted loss values corresponding to the $s^{th}$ iterative training, gradient adjustment on the first model parameters obtained in the $(s-1)^{th}$ iterative training of the sample removal model to obtain first model parameters corresponding to the $s^{th}$ iterative training, and perform $(s+1)^{th}$ cyclical adjustment until training of the artifact removal model ends, s being an integer greater than or equal to 1.

14. The apparatus according to claim 13, wherein the input module is further configured to input the predicted loss values obtained in the $(s-1)^{th}$ iterative training into a sample weight model obtained in the $s^{th}$ iterative training to output weight adjustment parameters corresponding to the $s^{th}$ iterative training.

15. The apparatus according to any one of claims 11 to 14, wherein

   the obtaining module is further configured to obtain a verification reference image and a verification artifact image whose image content matches;
   the input module is further configured to input the verification artifact image into a plurality of sample removal models to respectively output verification removal results corresponding to the verification artifact image;
   the determining module is further configured to determine verification loss values respectively corresponding to the plurality of sample removal models based on pixel differences between the verification removal results and the verification reference image; and
   the training module is further configured to train the sample weight model based on the verification loss values.

16. The apparatus according to claim 15, wherein the training module is further configured to perform, during the $s^{th}$ iterative training, gradient adjustment on second model parameters of the sample weight model based on verification loss values obtained in the $(s-1)^{th}$ iterative training to obtain a sample weight model corresponding to the $s^{th}$ iterative training.

17. The apparatus according to claim 16, wherein the determining module is further configured to: determine corresponding mapping relationships between the first model parameters and the second model parameters during the $(s-1)^{th}$ iterative training based on the first model parameters obtained in the $(s-1)^{th}$ iterative training; and determine the verification loss values obtained in the $(s-1)^{th}$ iterative training based on the mapping relationships.

18. A computer device, comprising a processor and a memory, the memory storing at least one program, the at least one program being loaded and executed by the processor to implement the method for training an artifact removal model according to any one of claims 1 to 10.

19. A computer-readable storage medium, having at least one program stored herein, the at least one program being loaded and executed by a processor to implement the method for training an artifact removal model according to any one of claims 1 to 10.

20. A computer program product, comprising computer instructions, the computer instructions, when executed by a processor, implementing the method for training an artifact removal model according to any one of claims 1 to 10.

Artifact removal model
130
Artifact removal
sub-model 1
Artifact removal
sub-model 2
Artifact removal
sub-model 3

Training

Plurality of sample
removal models 110

Sample removal model
1 (window range:
[−1000, 2000] HU)

Sample removal model
2 (window range:
[−320, 480] HU)

Sample removal model
3 (window range:
[−160, 240] HU)

Artifact removal result 111

1111    1112    1113

Sample image set 100

101    102

Image pair

112

Predicted loss value 1

Predicted loss value 2

Predicted loss value 3

120

Sample weight
model

121

Weight adjustment parameter 1

Weight adjustment parameter 2

Weight adjustment parameter 3

FIG. 1

FIG. 2

Obtain a reference image and an artifact image ⌐— 310

Input the artifact image into a plurality of sample removal models to obtain artifact removal results respectively ⌐— 320

Determine predicted loss values each respectively corresponding to one of the plurality of sample removal models based on a pixel difference between the respective artifact removal result and the reference image ⌐— 330

Input the predicted loss values into a sample weight model to output weight adjustment parameters respectively ⌐— 340

Train the plurality of sample removal models based on the predicted loss values and the weight adjustment parameters to obtain an artifact removal model comprising a plurality of artifact removal sub-models ⌐— 350

FIG. 3

Obtain a reference image and an artifact image — 310

Input the artifact image into a plurality of sample removal models to obtain artifact removal results respectively — 320

Determine predicted loss values each respectively corresponding to one of the plurality of sample removal models based on a pixel difference between the respective artifact removal result and the reference image — 330

Input predicted loss values obtained in $(s-1)^{th}$ iterative training into a sample weight model obtained in $s^{th}$ iterative training to output weight adjustment parameters corresponding to the $s^{th}$ iterative training — 341

Determine weighted loss values respectively corresponding to the plurality of sample removal models based on the plurality of predicted loss values and weight adjustment parameters corresponding to the plurality of predicted loss values — 351

Respectively adjust first model parameters of the plurality of sample removal models respectively based on the weighted loss values respectively corresponding to the plurality of sample removal models to obtain a plurality of artifact removal sub-models — 352

Use the plurality of artifact removal sub-models as an artifact removal model — 353

FIG. 4

FIG. 5

Schematic diagram 600 of structure of single Stage

M network 630

M (n–1) → X (n–1) → M (n–0.5) → ⊕ → M (n)

610

X (n–1)

X network 640

X (n–0.5) → ⊕

620

X (n)

FIG. 6

720

710 → Predicted loss value 711 →

730 → Weight adjustment parameter 731

FIG. 7

FIG. 8

Training process of the sample removal model and the sample weight model

$$\longrightarrow \theta^{(s-1)}\longrightarrow \theta^{(s)} \Longrightarrow \quad \ldots$$

$$\longrightarrow \Theta^{(s-1)} \longrightarrow \widehat{\theta}^{(s-1)}(\theta) \Longrightarrow \Theta^{(s)} \longrightarrow \quad \ldots$$

→ First model parameter training
→ Second model parameter training

FIG. 9

FIG. 10

1110

Start

Training or testing? — Testing → 1150 Obtain a test artifact image

Training 1120

Obtain an artifact image

1130

Perform iterative cyclical training on a first model parameter of a sample removal model and a second model parameter of a sample weight model

No

Whether the training reaches a number-of-times threshold

Yes 1140

Store a trained model

1160

Load a trained artifact removal model

1170

An artifact removal result is generated by an artifact removal model through forward calculation

1180

Output CT images of different preset window ranges corresponding to the artifact removal result

FIG. 11

**FIG. 12**

Obtaining module — 1310

Input module — 1320

Determining module — 1330

Training module — 1340

**FIG. 13**

Obtaining module ⌐1310

Input module ⌐1320

Determining
module ⌐1330

Training module ⌐1340

Determining
unit 1341

Adjustment
unit 1342

Gradient descent
module ⌐1350

Conversion module ⌐1360

FIG. 14

1500

1512

Network

1501

Central processing
unit

1511

Network interface
unit

System bus 1505

1504

1502

Random access
memory

Read-only memory

System memory 1503

1506

1513

Operating system

1514

Application

Mass storage
device

1515

Another program
module

FIG. 15

## INTERNATIONAL SEARCH REPORT

International application No.

**PCT/CN2023/096836**

### A. CLASSIFICATION OF SUBJECT MATTER

G06T5/00(2006.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, ENTXT, ENTXTC, DWPI, VEN, CNKI: 伪影, 伪像, 去, 除, 校正, 窗口, 区域, 不同, 多个, n个, 子模型, 子网络, 模型, 金属, artifact, reduce, remove, correct, window, ROI, different, multiple, sub model, sub network, , model, metal

### C. DOCUMENTS CONSIDERED TO BE RELEVANT

| Category* | Citation of document, with indication, where appropriate, of the relevant passages | Relevant to claim No. |
|---|---|---|
| PX | CN 115330615 A (TENCENT MEDICAL HEALTH SHENZHEN CO., LTD.) 11 November 2022 (2022-11-11) claims 1-14, and description, paragraphs 239-265 | 1-20 |
| X | CN 113689359 A (SHANGHAI UNITED IMAGING HEALTHCARE CO., LTD.) 23 November 2021 (2021-11-23) description, paragraphs 25-81 | 1-20 |
| A | CN 112446873 A (SHENZHEN NATIONAL RESEARCH INSTITUTE OF HIGH PERFORMANCE MEDICAL DEVICES CO., LTD.) 05 March 2021 (2021-03-05) entire document | 1-20 |
| A | CN 114241070 A (BEIJING CHANGMUGU MEDICAL TECHNOLOGY CO., LTD.; ZHANG YILING) 25 March 2022 (2022-03-25) entire document | 1-20 |
| A | CN 112862728 A (SHANGHAI BIREN INTELLIGENT TECHNOLOGY CO., LTD.) 28 May 2021 (2021-05-28) entire document | 1-20 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 August 2023** | **21 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/096836**

| C. | DOCUMENTS CONSIDERED TO BE RELEVANT | |
|---|---|---|
| Category* | Citation of document, with indication, where appropriate, of the relevant passages | Relevant to claim No. |
| A | EP 3731144 A1 (KONINKLIJKE PHILIPS N.V.) 28 October 2020 (2020-10-28)<br>entire document | 1-20 |

Form PCT/ISA/210 (second sheet) (July 2022)

International application No.

**PCT/CN2023/096836**

| Patent document cited in search report | | | Publication date (day/month/year) | Patent family member(s) | | | Publication date (day/month/year) |
|---|---|---|---|---|---|---|---|
| CN | 115330615 | A | 11 November 2022 | HK | 40075677 | A0 | 27 January 2023 |
| CN | 113689359 | A | 23 November 2021 | WO | 2023046092 | A1 | 30 March 2023 |
| CN | 112446873 | A | 05 March 2021 | None | | | |
| CN | 114241070 | A | 25 March 2022 | CN | 114241070 | B | 16 September 2022 |
| CN | 112862728 | A | 28 May 2021 | None | | | |
| EP | 3731144 | A1 | 28 October 2020 | None | | | |

Form PCT/ISA/210 (patent family annex) (July 2022)

**REFERENCES CITED IN THE DESCRIPTION**

**Patent documents cited in the description**

- CN 202210951294